(19) Europäisches Patentamt
European Patent Office
Office européen des brevets

(11) **EP 2 974 054 B1**

(12) **FASCICULE DE BREVET EUROPEEN**

(45) Date de publication et mention
de la délivrance du brevet:
**10.05.2017 Bulletin 2017/19**

(21) Numéro de dépôt: **14711948.1**

(22) Date de dépôt: **14.03.2014**

(51) Int Cl.:
**H04B 3/54** (2006.01)

(86) Numéro de dépôt international:
**PCT/EP2014/055070**

(87) Numéro de publication internationale:
**WO 2014/140251 (18.09.2014 Gazette 2014/38)**

(54) **SYSTÈME ET PROCÉDÉ DE COMMUNICATION BAS DÉBIT À COURANT PORTEUR**

SYSTEM UND VERFAHREN FÜR KOMMUNIKATION MIT NIEDRIGER DATENRATE ÜBER EINEN TRÄGERSTROM

SYSTEM AND METHOD FOR LOW DATA-RATE COMMUNICATION OVER A CARRIER CURRENT

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **15.03.2013 FR 1352338**

(43) Date de publication de la demande:
**20.01.2016 Bulletin 2016/03**

(73) Titulaire: **Mersen France SB SAS
69720 Saint-Bonnet-de-Mure (FR)**

(72) Inventeurs:
• **POZSGAY, Andras
F-74130 Contamine Sur Arve (FR)**
• **WELLIG, Armin
CH-1185 Mont-sur-Rolle (CH)**

(74) Mandataire: **Lavoix
62, rue de Bonnel
69448 Lyon Cedex 03 (FR)**

(56) Documents cités:
**WO-A1-2011/158681     WO-A1-2013/014879
US-A1- 2010 201 493     US-A1- 2012 325 283**

## Description

L'invention concerne un système de communication bas débit à courant porteur continu modulé, destiné à acheminer des messages de données utiles, émis de manière asynchrone et à une fréquence moyenne depuis une pluralité d'émetteurs de communication vers un même récepteur de communication au travers d'un bus filaire à courant continu porteur reliant entre eux et en série les émetteurs et le récepteur, et concerne un procédé de communication correspondant.

Un système de communication bas débit à courant porteur continu selon l'invention trouve par exemple une application dans les réseaux d'alimentation photovoltaïque pour lesquels il existe un besoin de transmettre des télémesures de panneaux ou modules photovoltaïques formant un ensemble d'alimentation photovoltaïque à une station centrale.

En effet, une des caractéristiques d'un dispositif de surveillance intégré dans un module photovoltaïque est de pouvoir communiquer régulièrement et de manière fiable les paramètres de production d'énergie et d'environnement de ce module, par exemple sa température et sa tension.

Afin de simplifier l'installation d'un tel système en termes de coût et de complexité supplémentaire, on cherche à éviter un câblage supplémentaire. Un exemple de l'art antérieur peut être trouvé dans le document WO2013/014879.

Une première famille de solutions propose la mise en oeuvre d'un système de communication sans fil, c'est-à-dire l'utilisation d'ondes radioélectriques, tandis qu'une deuxième famille de solutions propose d'utiliser comme milieu de propagation des signaux de communication les câbles d'énergie déjà existants pour former à moindre coût un bus de communication à courant porteur continu DC (en anglais Direct Current).

Les nombreuses solutions sans fil de la première famille développées à ce jour présentent des performances de communication fortement dégradées lorsque le système est soumis à des interférences sévères de multi trajets causés par les réflecteurs métalliques des structures des modules photovoltaïques, ou bien lorsque la station centrale est soumise à des masquages par les panneaux photovoltaïques situés au voisinage. En outre, ces solutions peuvent en fonction du protocole de communication sous jacent utilisé ne pas permettre une adaptation souple de la capacité du système de communication lorsque le nombre de modules photovoltaïques varie.

Ainsi, des solutions sont recherchées, permettant la mise en oeuvre d'un protocole de communication, robuste en termes de résistance à des problèmes d'interférences extérieures ou à des congestions dues à un trafic important, et ne nécessitant pas des ressources fréquentielles supplémentaires non disponibles.

Les nombreuses solutions de la deuxième famille, fondées sur des communications par courant porteur continu sur le bus de puissance DC, pallient aux inconvénients décrits ci-dessus. Celles développées à ce jour utilisent des modules électroniques d'émetteurs et/ou de récepteur de communication du commerce, vendus sur étagère et utilisant des modulations classiques de type FSK (frequency Shift Keying), ASK (Amplitude Shift Keying), PSK (Phase Shift Keying). Par exemple, le composant de la société STMicro Electronics, portant la référence ST 7540 et fondé sur une modulation de type FSK, est largement utilisé.

Toutefois ces dernières solutions présentent des inconvénients, d'une part en matière de complexité et de coût induit élevés, et d'autre part en terme de fiabilité. En effet, les plages de fonctionnement en température sont limitées en valeur haute à 85°C, tandis que pendant leur fonctionnement la température moyenne des modules photovoltaïques peut varier entre 30°C et 50°C et la température maximale peut atteindre 95°C lorsque les modules photovoltaïques sont non ventilés.

Ainsi, des solutions les moins complexes possibles à mettre en oeuvre et qui permettent de supporter des températures élevées pouvant aller au delà de 100°C sont recherchées.

Le problème technique est de proposer un système de communication bas débit à courant porteur continu, qui achemine de manière fiable des messages de données utiles, émis de manière asynchrone et à une fréquence moyenne depuis une pluralité d'émetteurs de communication vers un même récepteur, et qui utilise un protocole de communication à la fois simple à mettre en oeuvre et robuste par sa résistance aux températures élevées de fonctionnement et aux interférences que doivent supporter les équipements du système.

A cet effet, l'invention a pour objet un système de communication bas débit à courant porteur continu modulé, destiné à acheminer des messages de données utiles, émis de manière asynchrone et à une fréquence moyenne depuis un ou une pluralité d'au moins deux émetteurs de communication vers un même récepteur au travers d'un bus filaire à courant continu porteur reliant entre eux et en série les émetteurs et le récepteur, comprenant

un ou une pluralité d'aux moins deux émetteurs de communication,

un récepteur de communication,

un bus filaire à courant porteur continu modulé formant un canal de transmission mis en commun et reliant entre eux les émetteurs de communication de la pluralité et le récepteur de communication,

chaque émetteur de communication étant configuré pour former une première trame de transmission brute sous la forme d'une première séquence d'un premier nombre constant $N_t$ de donnés brutes binaires, encodées sur deux états pris parmi 0 et 1, la séquence de données brutes binaires formant la première trame étant subdivisée en une adresse physique, unique et différente caractérisant l'émetteur, une charge utile, et un code détecteur d'erreur de la première trame déterminé à partir de la charge utile et de l'adresse physique de l'émetteur de communication,

caractérisé en ce que

chaque émetteur de communication est configuré pour

étaler en fréquence selon un facteur d'étalement SF prédéterminé la première trame de transmission brute en une deuxième trame de transmission étalée en termes de spectre d'émission, la deuxième trame de transmission étalée se présentant sous la forme d'une deuxième séquence de bribes et étant obtenue, en codant d'abord successivement les données brutes binaires de la première trame de transmission brute en des symboles de longueur un deuxième nombre prédéterminé Ns selon une règle de correspondance biunivoque entre l'ensemble de toutes les séquences possibles de données brutes binaires de longueur le deuxième nombre Ns et un ensemble de deux puissance Ns symboles, puis en codant ensuite chaque symbole obtenu en une séquence codante élémentaire distincte d'étalement formée de bribes binaires, encodées sur deux états pris parmi 0 et 1, la séquence élémentaire codante distincte d'étalement étant fonction du symbole et ayant pour longueur un même troisième nombre entier prédéterminé de bribes défini comme le facteur d'étalement SF, et

moduler et émettre sur le bus filaire les bribes de la deuxième trame étalée en un signal émis de communication selon une modulation prédéterminée, en ce que

chaque séquence codante élémentaire d'étalement est choisie parmi les séquences possibles de bribes, de longueur le facteur d'étalement SF, de sorte à former un code équilibré présentant un pic central d'auto corrélation ayant un premier niveau nettement élevé par rapport à deuxièmes niveaux des produits de corrélations ayant des décalages de corrélation dont la durée est supérieure ou égale à une période de bribe, en ce que

les séquences codantes élémentaires d'étalement des symboles utilisées par tous les émetteurs sont identiques, et en ce que

les instants d'émission de début des deuxièmes trames étalées élaborées par chaque émetteur sont déterminés de manière autonome et libre par chaque émetteur, sans prise en compte d'un signal de synchronisation extérieur à l'émetteur.

Suivant des modes particulier de réalisation, le système de communication bas débit à courant porteur continu tel que défini ci-dessus comprend une ou plusieurs des caractéristiques suivantes :

- chaque émetteur comprend un module associé, unique et différent, de création d'instants d'émission de début des deuxièmes trames étalées, aléatoirement ou pseudo aléatoirement distribués et séparés par un nombre rationnel supérieur ou égal à zéro de périodes de bribes, pour créer des intervalles de temps de longueurs variables séparant les deuxièmes trames étalées reçues provenant d'émetteurs différents et de désynchroniser les dites deuxièmes trames étalées reçues ;
- le nombre de symboles, égal au nombre de séquences élémentaires, est compris dans l'ensemble des nombres entiers 2, 4, 8, et
  le facteur d'étalement est supérieur ou égal à 4, de préférence égal à 16 ;
- l'ensemble des séquences codantes élémentaires consiste en un premier ensemble de séquences codantes élémentaires de base et en un deuxième ensemble de séquences codantes élémentaires ayant chacun le même cardinal,
  chacune des séquences codantes élémentaires du deuxième ensemble étant la séquence codante complémentaire d'une séquence codante élémentaire de base correspondante du premier ensemble ;
- la modulation des bribes mise en oeuvre par les émetteurs de communication est une modulation de type à codage état fermé/état ouvert (OOK) selon laquelle à l'état 0 d'une bribe correspond sur le bus un premier niveau de tension et à l'état 1 d'une bribe correspond sur le bus un deuxième niveau de tension différent du premier ;
- chaque émetteur de communication comprend un générateur d'impulsions pour mettre en oeuvre la modulation des bribes sur le bus, et
  le générateur d'impulsions est au choix un générateur de courant commandé, un générateur de tension commandé, et un modulateur d'impédance commandé ;
- le récepteur est configuré pour
  filtrer et amplifier un signal reçu de communication comme étant la somme des signaux de communication émis par les émetteurs de communication et acheminés en une entrée du récepteur de communication, et
  échantillonner le signal reçu, dont la composante continue a été supprimée, en des échantillons de signal reçu suivant des instants d'échantillonnage répétés à au moins une fréquence égale au double de la fréquence d'émission des bribes, les instants d'échantillonnage se succédant selon un quatrième nombre prédéterminé Nphi, supérieur ou égal deux, de phases répétées cycliquement selon une période égale à la durée d'une bribe et repérée chacune par un rang de phase compris entre 1 et Nphi,
  après chaque instant d'échantillonnage et à partir d'un nombre de premiers échantillons, précédents et de même rang de phase que celui de l'instant d'échantillonnage, égal au produit du spectre d'étalement SF fois le nombre total de données binaires Nt d'une trame divisé par la longueur Ns d'un symbole, déterminer une troisième trame brute de réception à l'aide d'une unité de corrélation à fenêtre de trame glissante et de l'ensemble des séquences élémentaires, puis

à partir de la troisième trame, vérifier si le code de détection d'erreur de la troisième trame déterminée détecte ou non la troisième trame erronée, et lorsque aucune erreur n'est détectée par le code détecteur d'erreur, extraire l'adresse d'émetteur et la comparer à une liste d'émetteurs prédéterminée ;

- l'unité de corrélation à fenêtre de trame glissante du récepteur est configurée pour

après chaque instant d'échantillonnage et à partir d'un nombre de premiers échantillons, précédents et de même rang de phase que celui de l'instant d'échantillonnage, égal au facteur d'étalement SF, calculer en parallèle sur un ensemble de répliques transformées de corrélation et sur l'ensemble des configurations de décalage possible de chaque réplique de corrélation transformée, les produits de corrélation possibles, les répliques transformées de corrélation étant soit obtenues par transformation respective des niveaux 0, 1 de l'ensemble des séquences codante d'étalement en les niveaux -1, 1, soit obtenues par transformation des niveaux 0,1 de la moitié des séquences codantes élémentaires d'émission de base dépourvues de complémentarité entre elles en les niveaux -1,1 lorsque les séquences élémentaires d'émission consiste en un premier ensemble de séquences codantes élémentaires de base et un deuxième ensemble de séquences codantes élémentaires complémentaires à celles de base du premier ensemble, et

détecter le symbole reçu comme étant le symbole correspondant à

soit à la séquence codante élémentaire associée à la réplique transformée de corrélation du produit de corrélation calculé ayant le niveau le plus élevé lorsque les cardinaux respectifs de l'ensemble des séquences élémentaires codantes et de l'ensemble des répliques transformées de corrélation sont égaux,

soit à la séquence codante élémentaire associée à la réplique transformée de corrélation du produit de corrélation calculé ayant le niveau le plus élevé positif lorsque le cardinal de l'ensemble des séquences élémentaires codantes est le double du cardinal de l'ensemble des répliques transformées de corrélation,

soit à la séquence codante élémentaire complémentaire de la séquence codante élémentaire de base associée à la réplique transformée de corrélation du produit de corrélation ayant le niveau le plus élevé négatif calculé lorsque le cardinal de l'ensemble des séquences codantes élémentaires est le double du cardinal de l'ensemble des répliques transformées de corrélation,

puis décoder le symbole en la séquence des Ns bits correspondants et entrer les données binaires dans un registre à décalage ayant pour longueur la longueur Nt d'une troisième trame ; et

- la liste d'émetteurs prédéterminée est une liste fournie et fixée au récepteur lors de son installation ou est une liste d'émetteurs construite à partir d'un filtrage statistique mis en oeuvre sur les adresses d'émetteur extraites des troisièmes trames pour lesquelles aucune erreur n'est détectée par le code détecteur d'erreur.

L'invention a également pour objet un procédé de communication bas débit à courant porteur continu modulé mis en oeuvre par un système de communication tel que défini ci-dessus, destiné à acheminer des messages de données utiles, émis de manière asynchrone et à une fréquence moyenne depuis un ou une pluralité d'au moins deux émetteurs de communication vers un même récepteur de communication au travers d'un bus filaire à courant continu porteur reliant entre eux et en série les émetteurs de communication et le récepteur de communication, comprenant l'étape consistant en ce que,

chaque émetteur forme une première trame de transmission brute sous la forme d'une première séquence d'un premier nombre constant Nt de données brutes binaires, encodées sur deux états pris parmi 0 et 1, la séquence de données brutes binaires formant la première trame étant subdivisée en une adresse unique et différente caractérisant l'émetteur, une charge utile, et un code détecteur d'erreur de la première trame déterminé à partir de la charge utile et de l'adresse de l'émetteur,

et le procédé comprend en outre les étapes consistant en ce que

chaque émetteur étale en fréquence selon un facteur d'étalement SF prédéterminé la première trame de transmission brute en une deuxième trame de transmission étalée en termes de spectre d'émission, la deuxième trame de transmission étalée se présentant sous la forme d'une deuxième séquence de bribes et étant obtenue, en codant successivement d'abord les données brutes binaires de la première trame de transmission brute en des symboles de longueur un deuxième nombre prédéterminé Ns selon une règle de correspondance biunivoque entre l'ensemble de toutes les séquences possibles de données brutes binaires de longueur le deuxième nombre Ns et un ensemble de deux puissance Ns symboles, puis en codant chaque symbole obtenu en une séquence codante élémentaire distincte d'étalement formée de bribes binaires, encodées sur deux états pris parmi 0 et 1, la séquence codante élémentaire distincte d'étalement étant fonction du symbole et ayant pour longueur un même troisième nombre entier prédéterminé de bribes défini comme le facteur d'étalement SF, puis

chaque émetteur module et émet sur le bus filaire les bribes de la deuxième trame étalée en un signal d'émetteur selon une modulation prédéterminée,

chaque séquence élémentaire d'émission étant choisie parmi les séquences possibles de bribes, de longueur le facteur d'étalement SF, de sorte à former un code équilibré présentant un pic central d'auto corrélation ayant un premier niveau nettement élevé par rapport à deuxièmes niveaux des produits de corrélations ayant des décalages de corrélation dont la durée est supérieure ou égale à une période de bribe, et

les séquences codantes élémentaires d'étalement des symboles utilisées par tous les émetteurs de communication étant indépendantes de l'émetteur de communication, et

les instants d'émission de début des deuxièmes trames étalées élaborées par chaque émetteur de communication étant déterminés de manière autonome et libre par chaque émetteur de communication sans prise en compte d'un signal de synchronisation extérieur à l'émetteur de communication.

Suivant des modes particuliers de réalisation, le procédé de communication comporte une plusieurs des caractéristiques suivantes :

le récepteur de communication filtre et amplifie un signal reçu de communication comme étant la somme des signaux émis de communication par les émetteurs et acheminés en une entrée du récepteur, et

le récepteur de communication échantillonne le signal reçu de communication, dont la composante continue a été supprimée, en des échantillons de signal reçu suivant des instants d'échantillonnage répétés à au moins une fréquence égale au double de la fréquence d'émission des bribes, les instants d'échantillonnage se succédant selon un quatrième nombre prédéterminé Nphi, supérieur ou égal à deux, de phases répétées cycliquement selon une période égale à la durée d'une bribe et repérée chacune par un rang de phase compris entre 1 et Nphi, et

après chaque instant d'échantillonnage et à partir d'un nombre de premiers échantillons, précédents et de même rang de phase que celui de l'instant de l'instant d'échantillonnage, égal au produit du spectre d'étalement SF fois le nombre total de données binaires Nt d'une trame divisé par la longueur Ns d'un symbole, le récepteur détermine une troisième trame brute de réception à l'aide d'une unité de corrélation à fenêtre de trame glissante et de l'ensemble des séquences élémentaires, puis

à partir de la troisième trame, le récepteur vérifie si le code de détection d'erreur de la troisième trame déterminée détecte ou non la troisième trame erronée, et lorsque aucune erreur n'est détectée par le code détecteur d'erreur, le récepteur extrait l'adresse d'émetteur et la compare à une liste d'émetteurs prédéterminée.

L'invention a également pour objet un émetteur de communication bas débit comprenant

un premier module de formation d'une première trame de transmission brute sous la forme d'une première séquence d'un premier nombre constant Nt de donnés brutes binaires, encodées sur deux états pris parmi 0 et 1, la séquence de données brutes binaires formant la première trame étant subdivisée en une adresse unique et différente caractérisant l'émetteur, une charge utile, et un code détecteur d'erreur de la première trame déterminé à partir de la charge utile et de l'adresse de l'émetteur,

comprenant

un deuxième module configuré pour étaler en fréquence selon un facteur d'étalement SF prédéterminé la première trame de transmission brute en une deuxième trame de transmission étalée en termes de spectre d'émission, la deuxième trame de transmission étalée se présentant sous la forme d'une deuxième séquence de bribes et étant obtenue, en codant d'abord successivement les données brutes binaires de la première trame de transmission brute en des symboles de longueur un deuxième nombre prédéterminé Ns selon une règle de correspondance biunivoque entre l'ensemble de toutes les séquences possibles de données brutes binaires de longueur le deuxième nombre Ns et un ensemble de deux puissance Ns symboles, puis en codant chaque symbole obtenu en une séquence codante élémentaire distincte d'étalement formée de bribes binaires, encodées sur deux états pris parmi 0 et 1, la séquence codante élémentaire distincte d'étalement étant fonction du symbole et ayant pour longueur un même troisième nombre entier prédéterminé de bribes défini comme le facteur d'étalement SF, et

un générateur d'impulsions pour moduler et émettre sur le bus filaire les bribes de la deuxième trame étalée en un signal émis de communication selon une modulation prédéterminée,

chaque séquence élémentaire d'émission étant choisie parmi les séquences possibles de bribes, de longueur le facteur d'étalement SF, de sorte à former un code équilibré présentant un pic central d'auto corrélation ayant un premier niveau nettement élevé par rapport à deuxièmes niveaux des produits de corrélations ayant des décalages de corrélation dont la durée est supérieur à une période de bribe, et

les instants de début d'émission des deuxièmes trames élaborées par l'émetteur étant déterminés de manière autonome et libre par chaque émetteur sans prise en compte d'un signal de synchronisation extérieur à l'émetteur.

L'invention a également pour objet un récepteur de communication bas débit destiné à être intégré dans un système tel que défini ci-dessus, comprenant

une tête analogique de filtrage et d'amplification d'un signal reçu de communication comme étant la somme des signaux émis de communication par les émetteurs de communication et acheminés en une entrée du récepteur, et

une unité d'échantillonnage du signal reçu, dont la composante continue a été supprimée par la tête analogique, en des échantillons de signal reçu suivant des instants d'échantillonnage répétés à au moins une fréquence de Nyquist sensiblement égale au double de la fréquence d'émission des bribes, les instants d'échantillonnage se succédant selon un quatrième nombre prédéterminé Nphi, supérieur ou égal deux, de phases répétées cycliquement selon une période égale à la durée d'une bribe et repérée chacune par un rang de phase compris entre 1 et Nphi,

une unité de traitement configuré pour

après chaque instant d'échantillonnage et à partir d'un nombre de premiers échantillons, précédents et de même rang de phase que celui de l'instant de l'instant d'échantillonnage, égal au produit du spectre d'étalement SF fois le nombre total de données binaires N d'une trame divisé par la longueur Ns d'un symbole, déterminer une troisième trame brute de réception à l'aide d'une unité de corrélation à fenêtre de trame glissante et de l'ensemble des séquences élémentaires, puis

à partir de la troisième trame, vérifier si le code de détection d'erreur de la troisième trame déterminée détecte ou non la troisième trame erronée, et lorsque aucune erreur n'est détectée par le code détecteur d'erreur, extraire l'adresse d'émetteur et la comparer à une liste d'émetteurs prédéterminée.

L'invention a également pour objet un programme d'ordinateur comprenant des instructions de code de programme pour mettre en oeuvre les étapes du procédé de communication tel que défini ci-dessus lorsque ledit programme fonctionne sur un ou plusieurs calculateurs numériques du système de communication tel que défini ci-dessus.

L'invention sera mieux comprise et d'autres avantages de celle-ci apparaîtront plus clairement à la lecture de la description qui va suivre de plusieurs formes de réalisation de l'invention, donnée uniquement à titre d'exemple et faite en se référant aux dessins annexés dans lesquels :

- la Figure 1 est une vue de l'architecture générale d'un système de communication selon l'invention intégré dans un système d'alimentation photovoltaïque ;
- la Figure 2 est une vue de l'architecture générale d'un émetteur de communication du système de communication de la Figure 1 ;
- la Figure 3 est une vue de l'architecture détaillée de l'émetteur de communication de la Figure 2 au niveau de ses modules numériques ;
- la Figure 4 est une vue de niveau général d'une première forme de réalisation d'un protocole d'encodage de trames numériques mis en oeuvre par l'émetteur de communication des Figure 2 et 3 ;
- la Figure 5 est une vue détaillée du protocole d'encodage selon la première forme de réalisation de la Figure 4 ;
- les Figure 6 et 7 sont des vues des propriétés de corrélation des deux séquences élémentaires codantes utilisées dans la première forme de réalisation du protocole d'encodage des Figures 4 et 5 ;
- la Figure 8 est une vue de niveau général d'une deuxième forme de réalisation d'un protocole d'encodage de trames numériques mis en oeuvre par l'émetteur de communication des Figure 2 et 3 ;
- la Figure 9 est une vue détaillée du protocole d'encodage selon la deuxième forme de réalisation de la Figure 8 ;
- les Figures 10, 11, 12, et 13 sont respectivement des première, deuxième, troisième et quatrième formes de réalisation du générateur d'impulsions de l'émetteur décrit aux Figures 2 et 3;
- la Figure 14 est une vue d'une séquence de bribes modulées en OOK à la sortie de l'émetteur de communication ;
- la Figure 15 est une vue de l'architecture du récepteur de communication du système de communication de la Figure 1 selon une première forme de réalisation correspondant à la première forme de réalisation du protocole d'encodage des Figures 4 et 5 ;
- la Figure 16 est une vue de l'architecture d'une unité de calcul parallèle de produits de corrélation faisant partie du récepteur de la Figure 15 ;
- la Figure 17 est une vue de l'architecture du récepteur de communication du système de communication de la Figure 1 selon une deuxième forme de réalisation, correspondant à la deuxième forme de réalisation du protocole d'encodage des Figures 8 et 9 ;
- la Figure 18 est un ordinogramme d'un procédé de mise en oeuvre du système de communication de la Figure 1.

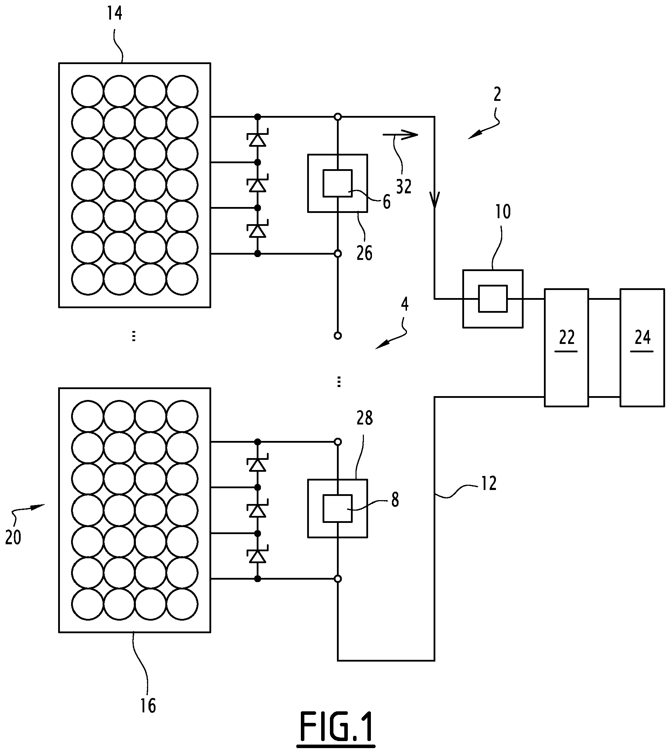

Suivant la Figure 1, un système de communication 2 bas débit à courant porteur comprend une pluralité 4 d'émetteurs de communication, deux seulement sur la Figure 1 étant représentés et désignés par les références 6 et 8, un récepteur de communication 10, et un bus filaire de communication 12 à courant porteur continu, reliant en série les émetteurs de communication 6, 8 et le récepteur 10.

Ici, chaque émetteur 6, 8 de communication de la pluralité 4 est respectivement associé à un module photovoltaïque 14, 16, les modules photovoltaïques étant reliés en série entre eux par leurs sorties au travers du bus filaire de communication 12 pour former une source d'alimentation photovoltaïque 20.

La source d'alimentation photovoltaïque 20 est couplée à un onduleur de puissance 22 alimentant un réseau électrique 24 de charges.

Ainsi, le bus filaire de communication 12 à courant continu constitue ici à la fois un bus de puissance de sortie à courant continu vis-à-vis des modules photovoltaïques et un bus filaire de communication à courant porteur continu modulé vis-à-vis des émetteurs 6, 8 et du récepteur 10 de communication.

Chaque émetteur de communication 6, 8 est respectivement intégré dans un module de surveillance 26, 28, unique et différent, configuré pour fournir des données de télémesures de surveillance fine du module photovoltaïque associé 14, 16. Pour chaque module photovoltaïque et à chaque envoi d'un message de données échantillonnées, les données de télémesures concernent la tension du module photovoltaïque en volts et la température de l'émetteur à l'instant d'envoi et se présentent par exemple ici sous la forme d'une charge utile occupant deux octets.

Le système de communication 2 est configuré pour acheminer les messages de données utiles de télémesures, émis de manière asynchrone et à une fréquence moyenne depuis la pluralité des émetteurs de communication jusqu'au récepteur de communication 10, connecté en série sur le bus de communication 12 entre les émetteurs de communication 4, 6 et l'onduleur 22, et en aval des émetteurs de communication 4, 6 dans le sens du courant porteur représenté par une flèche 32.

Ici, les modules de surveillance 26, 28 respectent l'exigence selon laquelle ils doivent transmettre des données à des intervalles non déterminés de manière prévisible dans le temps, c'est-à-dire aléatoires mais toutefois au moins à la fréquence d'une transmission par minute pour chacun des modules photovoltaïques.

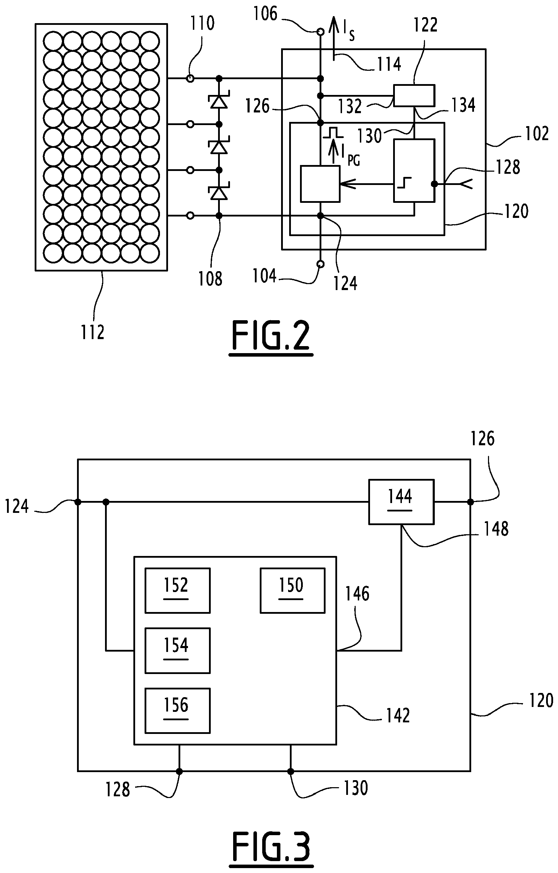

Suivant la Figure 2, un module de surveillance 102 générique représentant un module de surveillance quelconque pris parmi les modules de surveillance 26, 28 des modules photovoltaïques 14, 16 de la source d'alimentation photovoltaïque 20, comprend une première borne d'entrée 104 du bus 12 et une deuxième borne de sortie 106 du bus, connectées respectivement à une première de sortie 108 et à une deuxième borne de sortie 110 du module photovoltaïque générique, désigné par la référence 112 et représentant un module photovoltaïque quelconque de la pluralité 4 des modules photovoltaïques. Le courant sortant du bus est un courant de sortie de la deuxième borne de sortie 110 dans le sens de la flèche désigné par 114.

Le module de surveillance 102 comprend une émetteur de communication 120 et une unité de mesure 122 de la tension de sortie du module photovoltaïque 112.

L'émetteur de communication 120 comprend une première borne d'entrée 124 et une deuxième borne de sortie 126 connectées respectivement à la première borne d'entrée 104 du bus et à la deuxième borne de sortie 106 du bus.

L'émetteur de communication 120 comprend également une troisième borne d'entrée 128 de télémesure et une quatrième borne d'entrée 130 de télémesure pour recevoir respectivement une mesure de température par un capteur de température, non représenté sur la Figure 2, et une mesure de la tension du module photovoltaïque générique 112 par l'unité de mesure de tension 122.

L'unité de mesure de la tension 122 comprend une première borne de prélèvement de mesure 132 et une deuxième borne 134 de fourniture de mesure, connectées respectivement à la deuxième borne de sortie 106 du bus 12 et à la quatrième borne d'entrée 130 de télémesure de l'émetteur de communication 120.

Suivant la Figure 3, chaque émetteur de communication 6, 8 dont un représentant est l'émetteur de communication générique 120 de la figure 2 comporte des bornes d'interface externes identiques à celles de la Figure 2, c'est-à-dire la première borne d'entrée 124, la deuxième borne de sortie 126, la troisième borne d'entrée 128 de télémesure et la quatrième borne d'entrée 130 de télémesure.

L'émetteur de communication 120 comprend un calculateur numérique 142 et un générateur d'impulsions 144.

Le calculateur numérique 142 est ici un microprocesseur ou un microcontrôleur d'architecture classique, qualifié sur une large plage de température et apte à fonctionner à une température haute dépassant 100 °C.

Le calculateur numérique 142, connecté aux troisième et quatrième bornes d'entrée 128, 130 de télémesure, comporte une borne de sortie 146 reliée à une borne d'entrée 148 modulante du générateur d'impulsions 144 et une horloge interne 150 de référence propre à l'émetteur de communication.

Le calculateur numérique 142 est configuré pour mettre en oeuvre un traitement numérique de transformation des données numériques de télémesures échantillonnées fournies aux troisième et quatrième bornes d'entrée 128, 130 en un message de communication modulant contenant les informations de télémesures échantillonnées et numérisées.

Le traitement numérique est mis en oeuvre sous la forme de modules logiciels exécutés séquentiellement.

Un premier module 152 de formation de première trame est configuré pour former une première trame de transmission brute sous la forme d'une première séquence d'un premier nombre constant Nt de données brutes binaires ou bits, encodés sur deux états pris parmi 0 et 1. La séquence de données brutes binaires formant la première trame est subdivisée en une adresse physique, unique et différente caractérisant l'émetteur, une charge utile, et un code détecteur d'erreur de la première trame déterminé à partir de la charge utile et de l'adresse de l'émetteur. La charge utile contient les données de télémesures échantillonnées, ici la température et la tension de sortie du module, tandis que l'adresse physique de l'émetteur est une adresse chargée lors de l'installation sur site ou chargée au préalable en usine. Le code détecteur d'erreur est calculé sur la base d'un algorithme algébrique prédéterminé de type polynomial.

Un deuxième module 154 d'étalement en fréquence est configuré pour étaler selon un facteur d'étalement, prédéterminé et noté SF, la première trame de transmission brute en une deuxième trame de transmission étalée en termes de spectre d'émission. La deuxième trame de transmission étalée se présente sous la forme d'une deuxième séquence de bribes. La deuxième trame de transmission étalée est élaborée en codant d'abord les données brutes binaires de la première trame de transmission brute prises successivement par mots de longueur un deuxième nombre prédéterminé Ns de bits, appelés symboles, selon une règle de correspondance biunivoque entre l'ensemble de toutes les séquences possibles de données brutes binaires ou mots de longueur Ns et un ensemble de deux puissance Ns symboles, puis en codant ensuite chaque symbole obtenu en une séquence codante élémentaire distincte, d'émission et d'étalement, formée d'une suite de bribes binaires, encodées sur deux états pris parmi 0 et 1. La séquence codante élémentaire est donc fonction du symbole et possède pour longueur un même troisième nombre entier prédéterminé de bribes défini comme le facteur d'étalement SF. Chaque séquence codante élémentaire d'étalement est fixée et résulte d'un choix préalable de conception de l'émetteur et du système de communication. Lors de la phase de conception du deuxième module et du système de communication, chaque séquence codante élémentaire d'étalement a été choisie parmi les séquences possibles de bribes, de longueur le facteur d'étalement SF, de sorte à former un code équilibré présentant un pic central d'auto corrélation ayant un premier niveau nettement plus élevé que l'un quelconque des deuxièmes niveaux des produits d'auto corrélation pour lesquels la valeur absolue du décalage de corrélation est supérieur ou égal à la durée d'une bribe. Le rapport d'un quelconque des deuxièmes niveaux sur le premier niveau reste inférieur ou égal à 0,3.

Les séquences codantes élémentaires d'étalement des symboles utilisées par tous les émetteurs sont les mêmes, c'est-à-dire génériques et indépendantes de l'émetteur de communication. Seule l'adresse physique caractérise et permet d'identifier l'émetteur de communication.

Ainsi, les instants d'émission des deuxièmes trames étalées et élaborées par un émetteur donné quelconque, identifié par son adresse physique, sont déterminés de manière autonome et libre par l'émetteur sans prise en compte d'un signal de synchronisation extérieur à l'émetteur. Le protocole de communication ainsi obtenu est simplifié et plus robuste en raison de l'absence de signalisations échangées entre les émetteurs de communication et/ou entre les émetteurs et le récepteur de communication.

En particulier, le protocole de communication obtenu permet de s'affranchir de l'envoi d'une balise de synchronisation par la station centrale, même si les modules de surveillance transmettent les données à des intervalles non déterminés de manière prévisible dans le temps, c'est-à-dire aléatoires, et à au moins à la fréquence d'une transmission par minute pour chacun des modules photovoltaïques.

Ici, un troisième module 156 de création de sauts des instants de début d'émission des deuxièmes trames est configuré pour générer selon une séquence, unique et différente, dépendante de l'adresse physique de l'émetteur de communication, des instants de début d'émission des deuxièmes trames étalées, distribués aléatoirement ou pseudo aléatoirement de sorte à créer des intervalles de temps de longueurs variables séparant deux deuxièmes trames étalées de bribes consécutives.

Les intervalles de temps de longueurs variables déterminées par le troisième module 156 sont par exemple créés par un générateur de nombres pseudo aléatoires suivant un algorithme prédéterminé.

Un algorithme simple à mettre en oeuvre et efficace de génération de nombres aléatoires est par exemple l'algorithme MWC (dénommé en anglais Multily-With-Carry) inventé par G. Marsaglia qui peut générer un nombre très grand de séquences aléatoires de périodes très longues en fonction de l'adresse physique de l'émetteur de communication, considérée comme un paramètre d'entrée de la séquence générée par l'algorithme.

Ainsi, la présence au sein de chaque émetteur de communication d'un troisième module 156, unique et différent par sa séquence aléatoire des instants de début d'émission des deuxièmes trames, diminue la fréquence de l'évènement au cours duquel deux trames émises par deux émetteurs différents se superposent en réception de manière coïncidente, c'est-à-dire au cours duquel au moins deux symboles se superposent de manière synchrone, rendant impossible la résolution de la collision entre les deux trames.

En variante, le calculateur numérique de chaque émetteur de communication est dépourvu de troisième module. Cette configuration entraîne une dégradation de la capacité de transmission mais la fiabilité du système de communication est préservée.

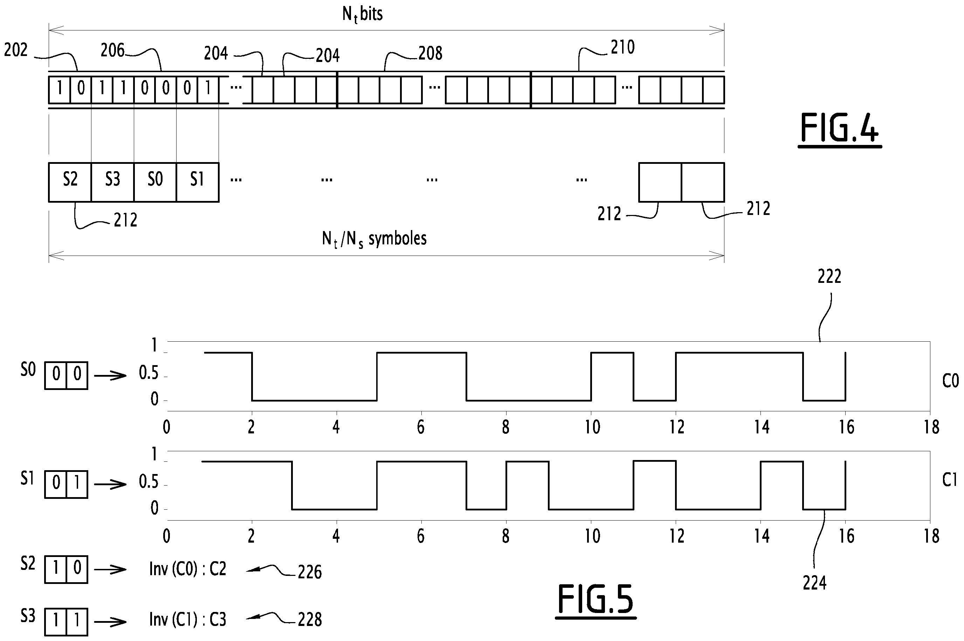

Suivant la Figure 4 et un premier mode de réalisation, une première trame brute 202 est ici une séquence de 64 bits 204, c'est-à-dire dans laquelle le premier nombre entier Nt est égal à 64.

La séquence de bits 204 formant la première trame 202 est répartie en une adresse physique 206 de 32 bits caractérisant de manière distinctive l'émetteur, une charge utile 208, ici de 16 bits, contenant huit bits de télémesure de la tension de sortie du module photovoltaïque et huit bits de la télémesure de la température de l'environnement du module photovoltaïque, et un code correcteur d'erreurs 210 de seize bits pour la détection d'erreurs et la résolution des adresses physiques en aveugle.

L'adresse physique 206 de trente-deux bits caractérisant de manière unique et différente chacun des émetteurs est sauvegardée dans une mémoire flash du calculateur numérique.

Le code de détection d'erreur 210, désigné par l'acronyme CRC (en anglais Cyclic Redundancy Check), est le code de longueur 16 bits normalisé par l'ANSI et ayant pour polynôme générateur $X^{16} + X^{15} + X^2 + 1$.

La première trame d'émission 202 est découpée en une succession de mots 212 de deux bits, chaque mot étant codé en un symbole correspondant, les symboles étant régis selon la règle de correspondance biunivoque suivante :

au mot 00 correspond un symbole S0, au mot 01 correspond un symbole S1, au mot 10 correspond un symbole S2 au mot 11 correspond un symbole S3.

Suivant la Figure 5, chaque symbole est encodé sur une séquence élémentaire codante d'étalement différente composée de 16 bribes binaires, chaque bribe ayant un état pris parmi les états possibles 0 et 1.

Ici, le symbole S0 est encodé sur une première séquence codante et de base de seize bribes 222, désignée par C0 qui s'écrit en notation hexadécimale sur deux octets 8C5D.

Le symbole S1 est encodé sur une deuxième séquence codante et de base de seize bribes 224, désigné par C1 qui s'écrit en notation hexadécimale sur deux octets CD25.

Le symbole S2 est encodé sur une troisième séquence codante de seize bribes 226, désignée par C2 qui est la séquence inverse au sens de l'addition booléenne de la première séquence codante 222 de base C0.

Le symbole S2 est encodé sur une troisième séquence codante de seize bribes 228, désignée par C3 qui est la séquence inverse au sens de l'addition booléenne de la première séquence codante 224 de base C1.

Ainsi par le codage successif des bits en symboles, et des symboles en séquences élémentaires codantes de bribes, la première trame brute est transformée en une deuxième trame de 512 bribes de longueur.

Les séquences codantes élémentaires 222, 224, 226, 228 ont été choisies afin de satisfaire les exigences suivantes.

Les séquences élémentaires codantes 222, 224, 226, 228 sont équilibrées, c'est-à-dire possèdent chacune le même nombre de zéro et de un, ce qui rend le décodage plus facile.

Indépendamment de la deuxième trame construite comme une séquence aléatoire de symboles S0, S1, S2, S3 codés en les séquences codantes élémentaires C0, C1, C2, C3, le nombre de bribes successives à un même état, c'est-à-dire 0 ou 1, est inférieur ou égal à 3, ce qui élimine la composante continue et les composantes basses fréquences dans le signal émis, et ce qui rend la tête de réception analogique en entrée plus facile à réaliser.

Les propriétés d'autocorrélation de chaque séquence élémentaire codante 222, 224, 226, 228 sont bonnes en termes de performances attendues sur la sortie du corrélateur du récepteur, c'est-à-dire une amplitude de signal élevée en absence de décalage de corrélation et une amplitude des lobes latéraux nettement plus basse en présence de décalage de corrélation.

Les propriétés de corrélations transverses entre les deux premières séquences codantes de base 222, 224 sont bonnes en termes d'un bas niveau de corrélation indépendamment du décalage de corrélation, ce qui permet d'obtenir un rapport signal à bruit élevé à la sortie du corrélateur du récepteur.

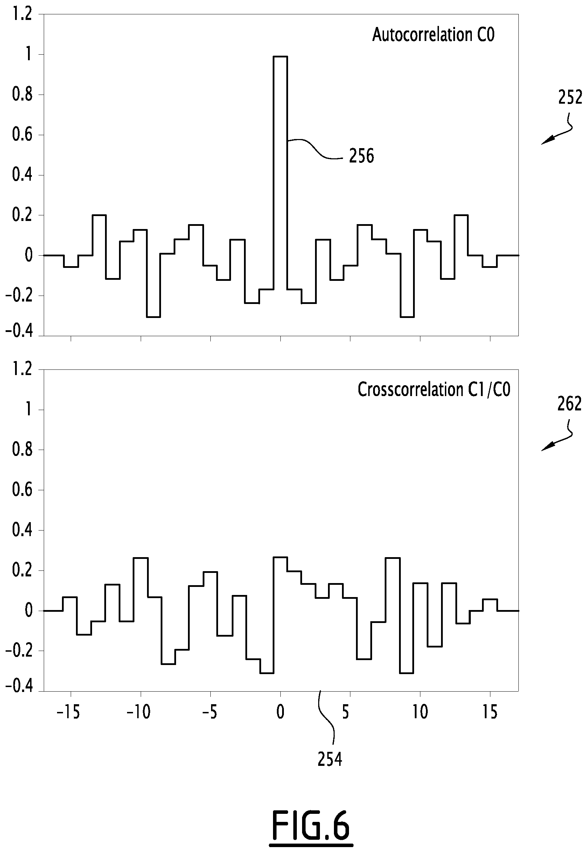

Suivant la Figure 6, un premier tracé 252 de la courbe d'évolution du produit d'autocorrélation de la première séquence de base 222, correspondant au symbole S0 codé, en fonction d'un retard de corrélation exprimé en nombre de périodes de bribe sur un axe d'abscisses 254, fait apparaître nettement un pic central étroit d'autocorrélation 256.

S'agissant des valeurs du produit d'autocorrélation obtenues pour des valeurs absolues de retards algébriques comprises entre 1 et 15, bornes incluses, elles restent inférieures ou égales à 0,3.

Suivant la Figure 6, un deuxième tracé 262 de la courbe d'évolution du produit de corrélation transverse de la deuxième séquence de base 224, correspondant au symbole S1 codé, par la première séquence de base 222, correspondant au symbole S0 codé, en fonction du retard algébrique de corrélation exprimé en nombre de périodes de bribe sur l'axe d'abscisses 254, montre que pour une valeur quelconque du retard algébrique, le produit de corrélation transverse reste inférieur ou égal à 0,3.

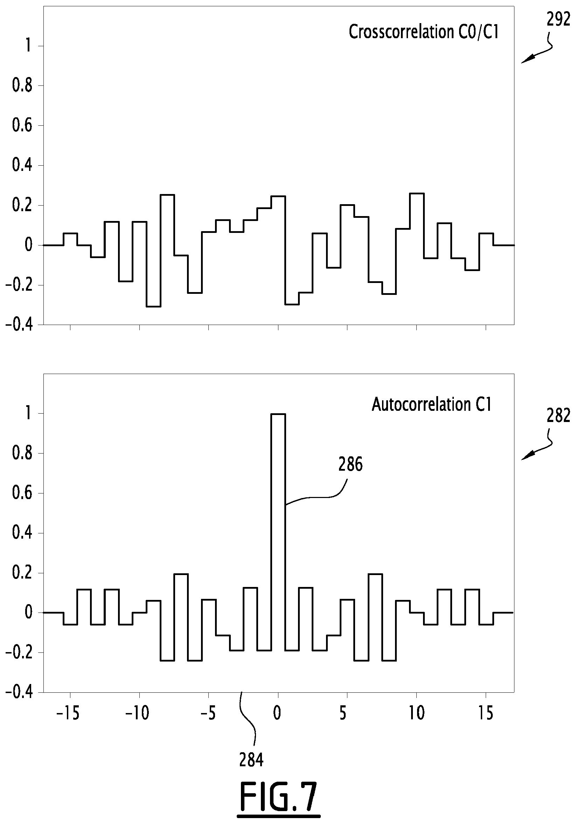

Suivant la Figure 7, un premier tracé 282 de la courbe d'évolution du produit d'autocorrélation de la deuxième séquence de base 224, correspondant au symbole S1 codé, en fonction d'un décalage de corrélation exprimé en nombre de périodes de bribe sur un axe d'abscisses 284, fait apparaître nettement un pic central étroit d'autocorrélation 286.

S'agissant des valeurs du produit d'autocorrélation obtenues pour des valeurs absolues de retards algébriques comprises entre 1 et 15, bornes incluses, elles restent inférieures ou égales à 0,3.

Suivant la Figure 7, un deuxième tracé 292 de la courbe d'évolution du produit de corrélation transverse de la première séquence de base 222, correspondant au symbole S0 codé, par la deuxième séquence de base 224, correspondant au symbole S1 codé, en fonction du retard algébrique de corrélation exprimé nombre de périodes de bribe sur l'axe d'abscisses 284, montre que pour une valeur quelconque du retard algébrique, le produit de corrélation transverse reste inférieur ou égal à 0,25.

Il est à remarquer que les propriétés de la corrélation transverse (dénommée en anglais crosscorrelation) de la première séquence codante de base 222 avec la troisième séquence codante 226 complémentaire, respectivement les propriétés de la corrélation transverse de la deuxième séquence codante de base 224 avec la quatrième séquence codante 228 complémentaire, conduisent chacune à un pic central négatif d'amplitude élevée tandis que l'amplitude des produits de corrélation correspondant à des décalages de corrélation non nuls est faible.

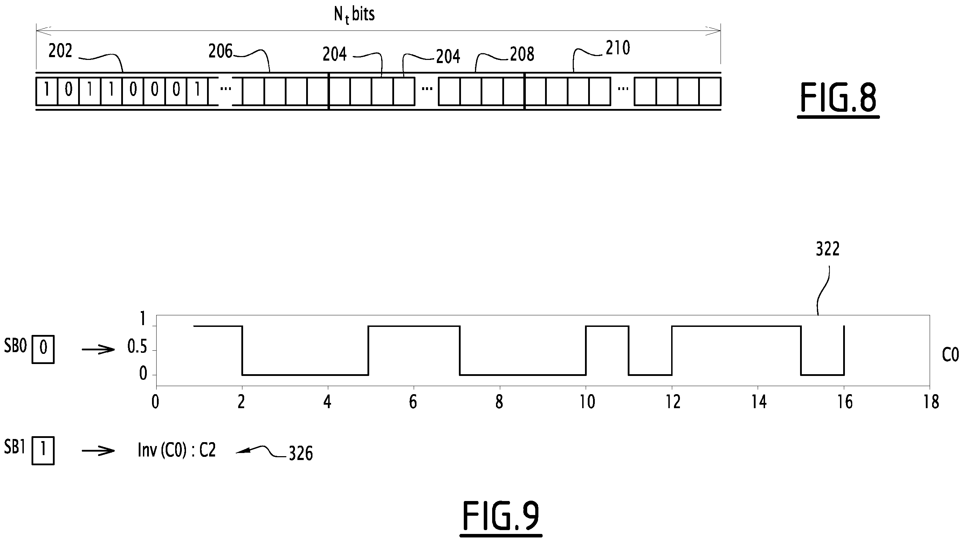

Suivant la Figure 8 et un deuxième mode de réalisation du protocole de transmission, une première trame de transmission brute possède la même structure que la première trame de transmission 202 décrite dans le premier mode de réalisation décrit à la Figure 4, c'est-à-dire une séquence de 64 bits 204, répartie en l'adresse physique 206 de l'émetteur, la charge utile 208 contenant les données de télémesure, et le code détecteur d'erreur CRC 210.

Ici, les notions de symbole et de bit se confondent et deux symboles peuvent être distingués : un premier symbole SB0 correspondant à un bit à l'état 0 et un deuxième symbole SB1 correspondant à un bit à l'état 1.

Suivant la Figure 9, chaque symbole est encodé sur une séquence codante élémentaire d'étalement différente composé de 16 bribes binaires, chaque bribe ayant un état pris parmi les états possibles 0 et 1.

Ici, le symbole SB0 est encodé sur une première séquence codante et de base de seize bribes 322 qui est la même que celle décrite à la Figure 5 sous la référence 222 et qui s'écrit en notation hexadécimale sur deux octets 8C5D.

Le symbole SB1 est encodé sur une deuxième séquence codante de seize bribes 326, qui est la séquence inverse au sens de l'addition booléenne de la première séquence codante 322 et qui est identique à la troisième séquence codante 226 décrite dans la Figure 5.

Ainsi par le codage successif des bits ou symboles, et des bits en les séquences codantes élémentaires de bribes correspondantes, la première trame brute 322 est transformée en une deuxième trame de 1024 bribes de longueur.

Les séquences codantes élémentaires 322, 326 ont été choisies à l'instar des séquences élémentaires codantes 222, 224, 226, 228 afin de satisfaire les exigences suivantes.

Les séquences codantes élémentaires 322, 326 sont équilibrées, c'est-à-dire possèdent chacune le même nombre de zéro et de un, ce qui rend le décodage plus facile.

Indépendamment de la deuxième trame construite comme une séquence aléatoire de symboles SB0, SB1 codés, le nombre de bribes successives à un même état, c'est-à-dire 0 ou 1, est inférieur ou égal à 3, ce qui élimine la composante continue et les composantes basses fréquences dans le signal émis, et ce qui rend la tête de réception analogique en entrée plus facile à réaliser.

Les propriétés d'autocorrélation de chaque séquence élémentaire codante 322, 326 sont bonnes en termes de performances attendues sur la sortie du corrélateur du récepteur, c'est-à-dire une amplitude de signal élevée en absence de décalage de corrélation et une amplitude des lobes latéraux nettement plus basse en présence de décalage de corrélation. Les propriétés d'autocorrélation de la première séquence élémentaire codante de base 322 sont les mêmes que celles représentées sur le tracé de la Figure 6.

Il est à remarquer que la corrélation transverse de la première séquence codante de base 322 avec la deuxième séquence codante 326 complémentaire conduit à un pic central négatif d'amplitude élevée tandis que l'amplitude des produits de corrélation correspondant à des décalages de corrélation non nuls est faible.

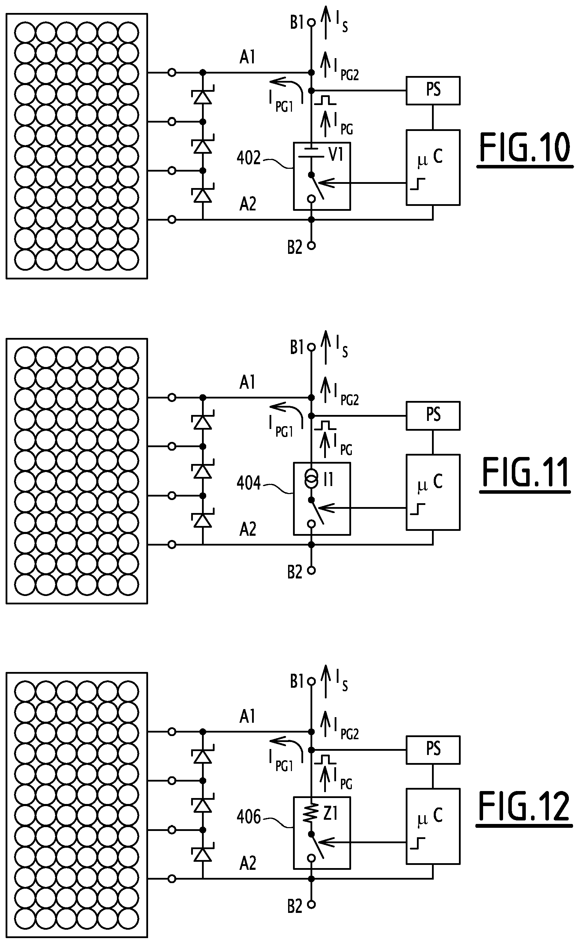

Suivant les Figures 10, 11, 12 et 13, le générateur d'impulsions 144 de la Figure 3 est respectivement réalisé par un premier mode de réalisation d'un générateur de tension 402 de valeur V1, un générateur de courant 404 de valeur 1, un modulateur d'impédance 406 de valeur Z1, et un deuxième mode de réalisation d'un générateur de tension 408 de valeur V1 à deux états commandé par le signal de commande issu du calculateur numérique.

Les valeurs I1, V1, Z1 peuvent être constantes ou variables s'adaptant aux conditions de fonctionnement du module photovoltaïque 112 et de la chaîne photovoltaïque.

Le courant noté $I_{PG}$ généré par le générateur d'impulsions est divisé en deux en un premier courant, noté $I_{PG1}$ et absorbé par le module photovoltaïque 122, et un deuxième courant traversant la chaîne photovoltaïque, c'est-à-dire le bus 12 à courant porteur. Le deuxième courant $I_{PG2}$ traverse la totalité de la chaîne de transmission, notamment le récepteur 10 et l'impédance d'entrée de l'onduleur notée Zinv.

En désignant par j un indice d'identification d'un module de la chaîne d'alimentation et de son émetteur de communication associé, et le deuxième courant correspondant $I_{PG2}(j)$, ce deuxième courant vérifie la relation :

$$I_{PG2}(j) = \frac{Z_{\mathrm{mod}}(j)}{\sum_{i=1}^{n}(Z_{\mathrm{mod}}(i)) + Z_{inv}} . I_{PG} \qquad \text{(relation (1))}$$

dans laquelle n désigne le nombre de modules photovoltaïques ou le nombre d'émetteurs du système de communication, $Z_{\mathrm{mod}}(j)$ désigne l'impédance du module d'indice j auquel le générateur d'impulsions est rattaché.

Comme l'impédance d'entrée de l'onduleur est très basse dans la bande de fréquences de communication et négligeable devant la somme des impédances des modules, la relation (1) se simplifie en la relation :

$$I_{PG2}(j) \cong \frac{Z_{\mathrm{mod}}(j)}{\sum_{i=1}^{n}(Z_{\mathrm{mod}}(i))} . I_{PG} \qquad \text{(relation (2))}$$

Chaque signal de communication $I_{PG2}(j)$ traverse le récepteur de communication où après une transformation courant/tension, le signal de tension obtenu est traité.

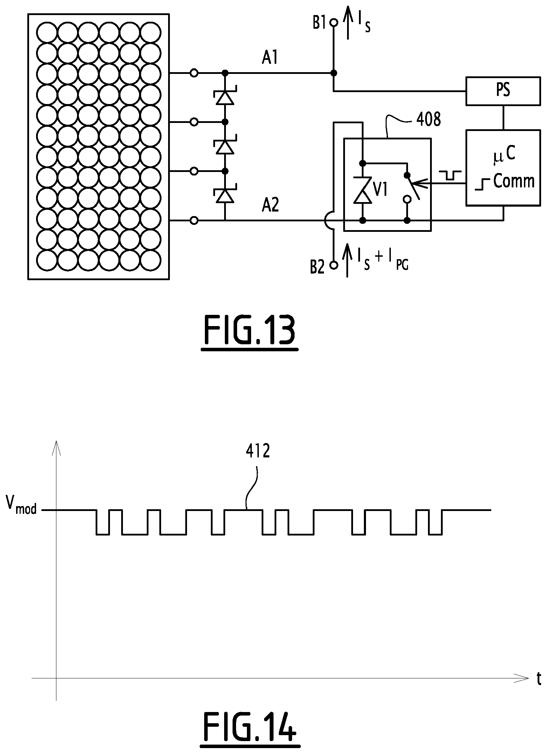

Suivant la Figure 14, un exemple de l'évolution temporelle 412 de la tension d'un signal modulé et envoyé par un émetteur de communication au travers de son générateur d'impulsions est représenté.

La modulation mise en oeuvre par chaque émetteur de communication au travers de son générateur d'impulsions de courant est une modulation de type encodage allumé/éteint, désignée classiquement par l'acronyme OOK (en anglais ON-OFF Keying).

Le générateur d'impulsions de courant peut également être vu comme un modulateur OOK de tension, commandé par le signal de bribes envoyé par le calculateur, et qui insère une chute de tension variable en série avec le module photovoltaïque.

Une tension de sortie modulée à travers le bus est obtenue avec deux niveaux de tensions différents, l'amplitude séparant les deux niveaux de l'impulsion étant prise égale à 5 Volts +/- 10%, et le débit de transfert étant pris ici égal à 1 kbps (kilobits par seconde).

Le temps de montée des fronts montants et le temps de descente des fronts descendants des impulsions ont été ajustés de sorte à réduire les fréquences parasites hors du spectre d'émission et ainsi respecter les exigences de compatibilité électromagnétique EMC (en anglais Electro Magnetic Compatibility).

Chaque signal de communication $I_{PG2}(j)$ traverse le récepteur de communication où après une transformation courant/tension, le signal de tension obtenu est traité.

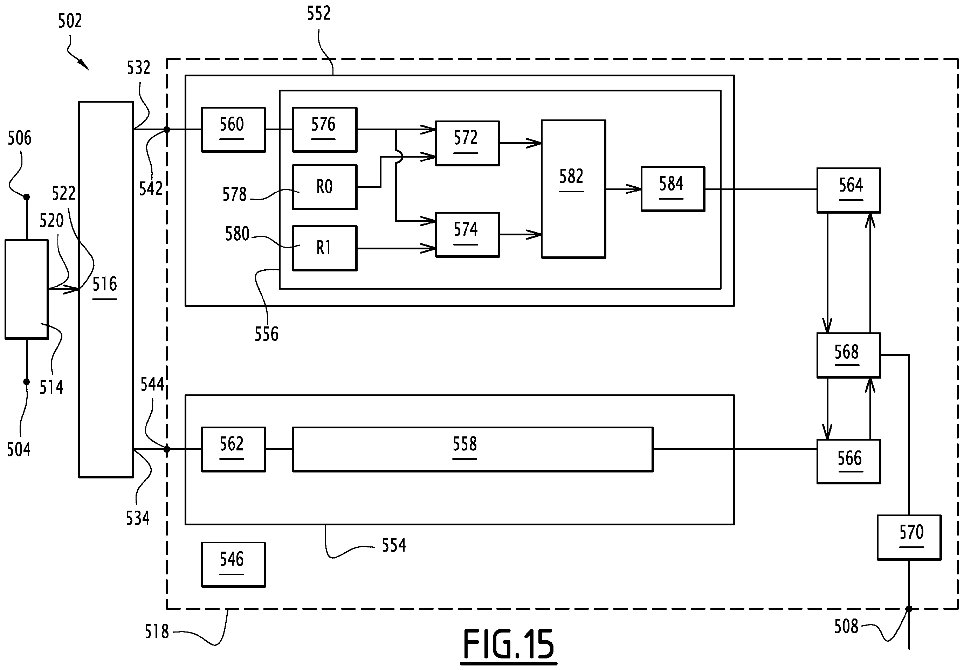

Suivant la Figure 15 et une première forme de réalisation, un récepteur 502 convenant à la réception de signaux de communication ayant été traités selon la première forme de réalisation d'encodage décrite à la Figure 4, comprend une première borne amont 504, connectée au travers du bus à courant continu 12 à l'émetteur de communication situé le plus en aval, une deuxième borne aval 506 connectée à l'onduleur de puissance au travers du bus à courant porteur, et une troisième borne de sortie 508 pour fournir avec un degré de fiabilité élevé des données de télémesures accompagnées de l'adresse physique de l'émetteur de communication auquel elles sont associées.

Le récepteur de communication 502 comporte une tête analogique 514, un convertisseur analogique/numérique 516, et un calculateur numérique 518.

La tête analogique 514 est configurée pour prélever, amplifier et filtrer un signal reçu de communication comme étant la somme des signaux de communication émis par les émetteurs de communication et acheminés sur le bus à courant porteur.

La tête analogique 514 dont les éléments ne sont pas représentés sur la Figure 15 comporte un convertisseur courant/tension suivi d'un filtre actif passe haut pour découpler le signal reçu de communication dont les composantes basse fréquence sont de faible niveau et ne véhiculent pas d'information et fournir le signal reçu de communication amplifié et filtré en une borne de sortie 520. Le convertisseur courant/tension 516 comporte par exemple une résistance shunt de 1 mohm de prélèvement de tension, connectée entre la première borne amont 504 et la deuxième borne aval 506, et un amplificateur opérationnel shunté en entrée par la résistance de prélèvement.

Le convertisseur analogique/numérique 516 est configuré pour échantillonner le signal reçu de la tête analogique 514, dont la composante continue a été supprimée, en des échantillons de signal reçu suivant des instants d'échantillonnage répétés à au moins deux fois la fréquence d'émission des bribes, les instants d'échantillonnage se succédant selon un quatrième nombre prédéterminé Nphi supérieur ou égal deux de phases répétées cycliquement selon la période égale à la durée d'une bribe et repérée chacune par un rang de phase compris entre 1 et Nphi

Le convertisseur analogique/numérique 516 comporte une borne d'entrée 522 connectée à la borne de sortie 520 de la tête analogique 514, et comprend ici à titre d'exemple deux première et deuxième bornes de sortie numériques 532, 534 correspondant chacune à un rang de phase $\varphi(1)$, $\varphi(2)$ différent.

Le calculateur numérique 518 est ici un microprocesseur ou un microcontrôleur d'architecture classique, pouvant être qualifié sur une large plage de température.

En variante, le calculateur numérique intègre le convertisseur analogique/numérique.

Le calculateur 518 comporte une première borne et une deuxième borne d'entrée 542, 544, connectées respectivement aux première et deuxième bornes de sortie numériques 532, 534 du convertisseur analogique/numérique 516, et la borne de sortie 508 du récepteur de communication, et une horloge interne 546.

Le calculateur numérique 508 est configuré pour mettre en oeuvre un traitement numérique de transformation de données numériques échantillonnées fournies en les bornes d'entrée 542, 544 en des données numériques fiables concernant les modules photovoltaïques.

Le traitement numérique est mis en oeuvre sous la forme de modules logiciels exécutés séquentiellement.

Un premier module 552 et un deuxième module 554 sont associés respectivement au premier rang de phase $\varphi(1)$ et au deuxième rang de phase $\varphi(2)$.

Les premier et deuxième modules 552, 554 sont configurés respectivement pour chaque phase, après chaque instant d'échantillonnage et à partir d'un nombre de premiers échantillons, précédents et de même rang de phase que celui de l'instant d'échantillonnage, égal au produit du facteur d'étalement SF fois le nombre total de données binaires Nt d'une trame divisé par la longueur Ns d'un symbole, déterminer une troisième trame brute de réception associée, la première au premier rang de phase φ(1) et la deuxième au deuxième rang de phase φ(2), à l'aide d'une unité de corrélation à fenêtre de trame glissante associée 556, 558 et de l'ensemble des séquences élémentaires codantes de base.

Il est à remarquer qu'avant la mise en oeuvre de la détermination de la troisième trame proprement dite, un filtrage numérique de réjection de l'harmonique d'ordre 2 du convertisseur de puissance est mis en oeuvre au sein des premier et deuxième modules 552, 554 par une unité de réjection associé 560, 562.

Un troisième module 564 et un quatrième module 566 sont associés respectivement au premier module 552 et au deuxième module 554.

Les troisième et quatrième modules 564, 566 sont configurés pour vérifier à partir de leur troisième trame respective si le code de détection d'erreur détecte ou non la troisième trame erronée, et lorsque aucune erreur n'est détectée par le code détecteur d'erreur, pour extraire l'adresse d'émetteur et la comparer à une liste d'émetteurs 568 prédéterminée.

La liste d'émetteurs prédéterminée 568 est une liste fournie et fixée au récepteur lors de son installation ou est une liste d'émetteurs construite à partir d'un filtrage statistique mis en oeuvre sur les adresses d'émetteur extraites des troisièmes trames pour lesquelles aucune erreur n'est détectée par le code détecteur d'erreur.

Lorsque l'adresse extraite figure dans la liste 568, les données de télémesures de la charge utile et l'adresse physique de l'émetteur de communication associé sont délivrées en la sortie par une unité de délivrance 570.

Suivant la Figure 15, seule est représentée de manière détaillée l'architecture de l'unité de corrélation à fenêtre de trame glissante 556 associée au premier module 552 dans lequel seuls les échantillons de rang φ(1) sont traités.

L'architecture, non représentée sur la Figure 15, de l'unité de corrélation à fenêtre de trame glissante 558 associée au deuxième module 554 est identique à celle de l'unité de corrélation 556 du premier module 552 et n'en diffère seulement que par le fait que seuls les échantillons de deuxième rang φ(2) sont traités.

La première unité de corrélation à fenêtre de trame glissante 556 est configurée pour calculer en parallèle les produits de corrélation possible sur un ensemble de répliques transformées de corrélation et sur l'ensemble des configurations de décalage possible de chaque réplique de corrélation transformée. Ce calcul parallèle est mis en oeuvre après chaque instant d'échantillonnage et à partir d'un nombre de premiers échantillons, précédents et de même premier rang de phase φ(1) que celui de l'instant d'échantillonnage, égal au facteur d'étalement SF. Les répliques transformées de corrélation sont obtenues par transformation des niveaux 0,1 de la moitié des séquences élémentaires codantes de base dépourvues de complémentarité entre elles en les niveaux -1,1. Ici, comme il a été vu, les symboles codés S0 et S1 correspondent à un premier ensemble de séquences élémentaires de base, le deuxième ensemble de séquences élémentaires complémentaires à celles du premier ensemble étant constitué des séquences associées au symbole codé S2 et S3. Ici, par exemple, les répliques transformées de corrélation sont obtenues par transformation des niveaux 0,1 des séquences élémentaires codantes d'émission associées à S0, S1. La mise en oeuvre de ce calcul parallèle est assuré par une première unité de calcul parallèle 572 et une deuxième unité de calcul parallèle 574, associées respectivement à la première réplique transformée R0 du symbole codé C0 et à la deuxième réplique transformée R1 du symbole codé C1. Les première et deuxième unités de calcul parallèle 572, 574 sont alimentées par une mémoire tampon 576 de longueur SF des échantillons de rang φ(1) et par les répliques transformées R0, R1 stockées dans des mémoires associées 578, 580.

En variante, lorsque toutes les séquences codantes élémentaires sont dépourvues de complémentarité, c'est-à-dire sont toutes des séquences codantes de base, les répliques transformées de corrélation sont obtenues par transformation respective des niveaux 0, 1 de l'ensemble des séquences élémentaires codantes en les niveaux -1, 1.

Au travers d'une unité de détection 582, la première unité de corrélation à fenêtre de trame glissante 556 est configurée pour détecter le symbole reçu comme symbole détecté à partir des produits de corrélation possibles.

Lorsque le cardinal de l'ensemble des séquences codantes élémentaires est le double du cardinal de l'ensemble des séquences codantes élémentaires de base, le symbole détecté correspond :

- soit à la séquence codante élémentaire associée à la réplique transformée de corrélation du produit de corrélation calculé ayant le niveau le plus élevé positif lorsque le cardinal de l'ensemble des séquences codantes élémentaires est le double du cardinal,
- soit à la séquence élémentaire complémentaire de la séquence codante élémentaire associée à la réplique transformée de corrélation du produit de corrélation calculé ayant le niveau le plus élevé négatif calculé.

En variante, le symbole détecté correspond à la séquence codante élémentaire associée à la réplique transformée de corrélation du produit de corrélation calculé ayant le niveau le plus élevé lorsque les cardinaux respectifs de l'ensemble des séquences codantes élémentaires et de l'ensemble des répliques transformées de corrélation sont égaux.

Au travers d'une unité de décodage/sérialisation symboles/bits 584, la première unité de corrélation à fenêtre de trame glissante 556 est configurée pour décoder le symbole détecté par l'unité de détection 582 en la séquence des Ns bits correspondants et entrer les données binaires dans un registre à décalage ayant pour longueur la longueur Nt d'une troisième trame.

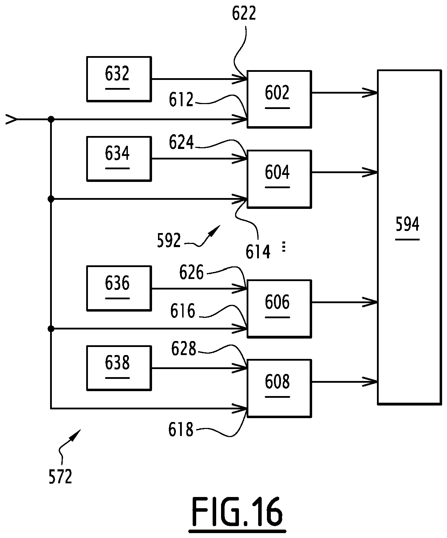

Suivant la Figure 16 et une architecture détaillée, la première unité de calcul parallèle 572 comporte une batterie 592 de SF corrélateurs élémentaires et une unité de sélection 594 de produit de corrélation.

Ici sur la Figure 16, seuls quatre corrélateurs élémentaires parmi les seize, désignés respectivement par 602, 604, 606, 608 sont représentés, correspondant à des rangs différents de décalage de la réplique élémentaire transformée R0 associée à la séquence codante C0, ici 0,1, 14 et 15.

Les seize corrélateurs élémentaires 602, 604, 606, 608 sont disposés en parallèle et alimentés chacun en une première entrée 612, 614, 616, 618 différente, connectée à la sortie de la mémoire tampon, et par une deuxième entrée différente 622, 624, 626, 628 de la réplique élémentaire transformée R0 associée au rang 0 et décalée cycliquement d'un rang de décalage différent pris dans la suite des entiers allant de 0 à 15.

Chaque corrélateur élémentaire est 602, 604, 606, 608 est configuré pour calculer un produit de corrélation comme produit de corrélation d'une même fenêtre glissante d'échantillons reçus de même premier rang $\varphi(1)$, la fenêtre contenant ici 16 échantillons successifs de premier rang avec une configuration unique et différente 632, 634, 636, 638 de la réplique élémentaire transformée R0, associée au rang 0 et décalée cycliquement d'un rang de décalage différent.

L'unité de sélection 594 de produit de corrélation est configurée pour sélectionner sans changement de signe parmi les 16 produits de corrélations, calculés en parallèle et fournis par les corrélateurs élémentaires 602, 604, 606, 608, le produit de corrélation ayant la plus grande valeur absolue.

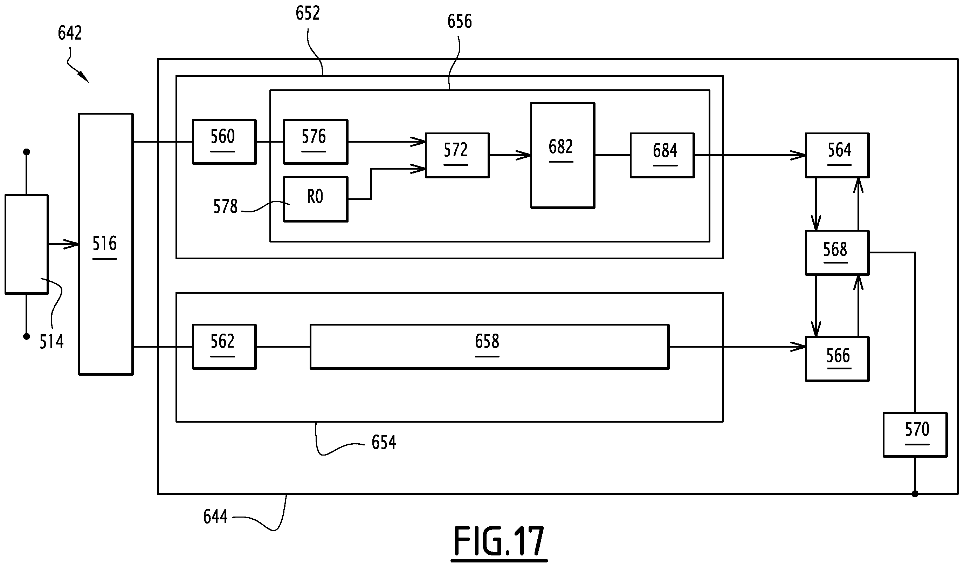

Suivant la Figure 17 et une deuxième forme de réalisation de récepteur 642, convenant à la deuxième forme de réalisation du protocole, d'encodage le récepteur 642 comprend à l'instar du récepteur de la Figure 15, la même tête analogique 514 et le même convertisseur analogique/numérique 516.

A l'instar du récepteur de la Figure 15, le récepteur est configuré traiter un signal reçu échantillonné sur deux phases $\varphi(1)$, $\varphi(2)$ et un signal de facteur d'étalement égal à 16.

A l'inverse du récepteur de la Figure 15, les symboles détectés ne sont pas des mots de deux bits. Ici les notions de bits et symboles se confondent.

Le récepteur 642 comporte ici un calculateur 644 de même architecture matérielle et de même schéma d'interface que le calculateur du récepteur de la Figure 15.

Le calculateur numérique 644 diffère du calculateur par sa configuration logicielle.

Le traitement numérique mis en oeuvre par le calculateur sous la forme de modules logiciels exécutés séquentiellement, comporte un premier module 652 et un deuxième module 654, associés respectivement au premier rang de phase $\varphi(1)$ et au deuxième rang de phase $\varphi(2)$, et les mêmes troisième et quatrième modules 564, 566 que ceux décrits à la Figure 15.

Les premier et deuxième modules 652, 654 sont configurés respectivement pour chaque phase, après chaque instant d'échantillonnage et à partir d'un nombre de premiers échantillons, précédents et de même rang de phase que celui de l'instant de l'instant d'échantillonnage, égal ici au produit du spectre d'étalement SF fois le nombre total de données binaires Nt d'une trame, pour déterminer respectivement une troisième trame brute de réception et une quatrième trame brute de réception associées au premier rang de phase $\varphi(1)$ et au deuxième rang de phase $\varphi(2)$, à l'aide d'une unité de corrélation à fenêtre de trame glissante associée 656, 658 et de l'ensemble des séquences élémentaires codantes de base.

Il est à remarquer qu'avant la mise en oeuvre de la détermination de la troisième trame et de la quatrième trame proprement dite, un même filtrage numérique de réjection de l'harmonique d'ordre 2 du convertisseur de puissance que celui décrit à la Figure 15 est mis en oeuvre au sein des premier et deuxième module par les mêmes unités de réjection associées 560, 562.

Suivant la Figure 17, seule est représentée de manière détaillée l'architecture de l'unité de corrélation à fenêtre de trame glissante 656 associée au premier module 652 dans lequel seuls les échantillons de rang $\varphi(1)$ sont traités.

L'architecture, non représentée sur la Figure 17, de l'unité de corrélation à fenêtre de trame glissante 658 associée au deuxième module 654 est identique à celle de l'unité de corrélation 656 du premier module et n'en diffère seulement que par le fait que seuls les échantillons de deuxième rang $\varphi(2)$ sont traités.

La première unité de corrélation à fenêtre de trame glissante 656 est configurée pour calculer en parallèle les produits de corrélation possibles sur un ensemble de répliques transformées de corrélation et sur l'ensemble des configurations de décalage possible de chaque réplique de corrélation transformée. Ce calcul parallèle est mis en oeuvre après chaque instant d'échantillonnage et à partir d'un nombre de premiers échantillons, précédents et de même premier rang de phase $\varphi(1)$ que celui de l'instant de l'instant d'échantillonnage, égal au facteur d'étalement SF. Les répliques transformées de corrélation sont obtenues par transformation des niveaux 0,1 de la moitié des séquences élémentaires d'émission dépourvues de complémentarité entre elles en les niveaux -1,1. Ici, comme il a été vu dans la description de la Figure 7, le symbole codé ou bit codé SB0 correspond à un premier ensemble singleton d'une séquence codante élémentaire de base, le deuxième ensemble singleton de la séquence codante élémentaire complémentaire à celle du premier ensemble étant ici constitué de la séquence associée au symbole codé SB1, c'est-à-dire le bit 1 codé. Ici, par exemple, une unique réplique transformée de corrélation R0 est obtenue par transformation des niveaux 0,1 de la séquence élémentaire codante de base C0 associée au symbole SB0.

La mise en oeuvre de ce calcul parallèle est assurée par ici par une seule unité de calcul parallèle identique à la première unité de calcul parallèle 572 associée à la première réplique transformée du bit codé S0 alimenté par la même mémoire tampon 576 de longueur SF des échantillons de rang $\varphi(1)$ et de la répliques transformée stockée dans la mémoire 578.

Au travers d'une unité de détection 682, la première unité de corrélation à fenêtre de trame glissante 656 est configurée pour détecter le bit reçu comme le bit détecté à partir des produits de corrélation possibles.

Lorsque le cardinal de l'ensemble des séquences codantes élémentaires est le double du cardinal de l'ensemble des répliques élémentaires, ce qui est la cas ici , le bit détecté correspond :

- soit à la séquence codante élémentaire associée à la réplique transformée de corrélation pour laquelle le produit de corrélation calculé possède le niveau le plus élevé en valeur absolue et est de signe positif,
- soit à la séquence codante élémentaire complémentaire de la séquence codante élémentaire associée à la réplique transformée de corrélation pour laquelle le produit de corrélation calculé possède le niveau le plus élevé en valeur absolue et est de signe négatif.

En variante, le bit détecté correspond à la séquence codante élémentaire associée à la réplique transformée de corrélation du produit de corrélation calculé ayant le niveau le plus élevé lorsque les cardinaux respectifs de l'ensemble des séquences codantes élémentaires et de l'ensemble des répliques transformées de corrélation sont égaux.

Au travers d'un unité 684 de sérialisation des bits, la première unité de corrélation à fenêtre de trame glissante 656 est configurée pour entrer les données binaires sous forme de bits détectés dans un registre à décalage ayant pour longueur la longueur Nt d'une troisième trame.

En variante, les calculateurs numériques décrits dans les Figures 4, 15, 17 et leurs modules logiciels peuvent être réalisés sous la forme de circuits électroniques de logique câblés ayant un niveau d'intégration plus ou moins élevés, comme par exemple un circuit ASIC dédié, un ou plusieurs circuit FPGA.

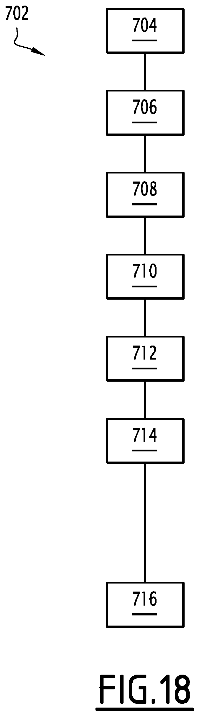

Suivant la Figure 18, un procédé de communication 702, bas débit par courant porteur continu modulé, met en oeuvre le système de communication décrit ci-dessus.

Le procédé de communication 702 est destiné à acheminer des messages de données utiles, émis de manière asynchrone et à une fréquence moyenne depuis un ou une pluralité d'au moins deux émetteurs de communication vers un même récepteur au travers d'un bus filaire de puissance à courant continu porteur reliant entre eux et en série les émetteurs et le récepteur.

Le procédé de communication comprend un ensemble d'étapes 704, 706, 708, 710,712,714,716,718.

Dans la première étape 704, chaque émetteur forme une première trame de transmission brute sous la forme d'une première séquence d'un premier nombre constant NT de donnés brutes binaires, encodées sur deux états pris parmi 0 et 1, la séquence de données brutes binaires formant la première trame étant subdivisée en une adresse unique et différente caractérisant l'émetteur, une charge utile, et un code détecteur d'erreur de la première trame déterminé à partir de la charge utile et de l'adresse de l'émetteur.

Dans la deuxième étape 706, chaque émetteur étale en fréquence selon un facteur d'étalement SF prédéterminé la première trame de transmission brute en une deuxième trame de transmission étalée en termes de spectre d'émission, la deuxième trame de transmission étalée se présentant sous la forme d'une deuxième séquence de bribes et étant obtenue, en codant d'abord les données brutes binaires de la première trame de transmission brute en des symboles de longueur un deuxième nombre prédéterminé Ns selon une règle de correspondance biunivoque entre l'ensemble de toutes les séquences possibles de données brutes binaires de longueur le deuxième nombre Ns et un ensemble de deux puissance Ns symboles, puis en codant ensuite chaque symbole obtenu en une séquence codante élémentaire distincte d'étalement formée de bribes binaires, encodées sur deux états pris parmi 0 et 1, la séquence élémentaire distincte codante d'émission étant fonction du symbole et ayant pour longueur un même troisième nombre entier prédéterminé de bribes défini comme le facteur d'étalement SF.

Dans la troisième étape 708, chaque émetteur module et émet sur le bus filaire les bribes de la deuxième trame étalée en un signal d'émetteur selon une modulation prédéterminée, par exemple la modulation OOK. Chaque séquence codante élémentaire est choisie parmi les séquences possibles de bribes, de longueur le facteur d'étalement SF, de sorte à respecter les exigences suivantes :

- chaque séquence élémentaire forme un code équilibré présentant un pic central d'auto corrélation ayant un premier niveau et des pics secondaire d'auto corrélation ayant des deuxièmes niveaux nettement moins élevés que le premier niveau dans un rapport inférieur ou égale à 0,3,
- au moins une moitié des séquences élémentaires codantes des niveaux de corrélation transverse entre elles nettement inférieur au premier niveau d'auto corrélation,
- les séquences élémentaires codantes d'émission et d'étalement des symboles utilisées par tous les émetteurs sont indépendantes de l'émetteur.

Les instants d'émission des premières trames brutes élaborées par chaque émetteur sont déterminés de manière autonome et libre par chaque émetteur sans prise en compte d'un signal de synchronisation extérieur à l'émetteur.

Dans la quatrième étape 710, le récepteur de communication capte, amplifie et filtre un signal reçu de communication comme étant la somme des signaux de communication émis par les émetteurs de communication et acheminés en une entrée du récepteur.

Dans la cinquième étape 712 le récepteur de communication échantillonne le signal reçu, dont la composante continue a été supprimée, en des échantillons de signal reçu suivant des instants d'échantillonnage répétés à une fréquence supérieure à la fréquence d'émission des bribes, les instants d'échantillonnage se succédant selon un quatrième nombre entier prédéterminé Nphi, supérieur ou égal deux, de phases répétées cycliquement selon une période égale à la durée d'une bribe et repérée chacune par un rang de phase compris entre 1 et Nphi.

Dans une sixième étape 714, après chaque instant d'échantillonnage et à partir d'un cinquième nombre de premiers échantillons, précédents et de même rang de phase que celui de l'instant d'échantillonnage, égal au produit du facteur d'étalement SF fois le nombre total de données binaires Nt d'une trame divisé par la longueur Ns d'un symbole, le récepteur de communication détermine une troisième trame brute de réception à l'aide d'une unité de corrélation à fenêtre de trame glissante et de l'ensemble des séquences élémentaires.

Puis dans la septième étape 716, après chaque instant d'échantillonnage associé à un même rang de phase, lorsque les troisièmes trames brutes associés aux Nphi moins un instants d'échantillonnage immédiatement précédents et à l'instant d'échantillonnage associé au même rang de phase, le récepteur de communication vérifie si le code de détection d'erreur de la troisième trame déterminée détecte ou non la troisième trame erronée, et lorsque aucune erreur n'est détectée par le code détecteur d'erreur, le récepteur extrait l'adresse d'émetteur et la compare à une liste d'émetteurs prédéterminée.

On peut utiliser la robustesse de la transmission à travers l'exemple d'un système utilisant une adresse de 32 bits, une charge utile de 16 bits un CRC de 16 bits, avec Ns égal à 4 et SF égal 16. Il peut être montré que la probabilité d'avoir un CRC valide de seize bits dans une trame aléatoire est de $2^{-16}$. Comme une prétrame est décodée chaque 0,5 milliseconde, une trame candidate avec un CRC valide est produite en moyenne chaque trente trois secondes. En outre comme il y a $2^{32}$ adresses physiques possibles et que vingt quatre au maximum d'entre elles sont utilisées dans une chaîne photovoltaïque, la probabilité d'une détection fausse d'une adresse réelle est de vingt quatre fois $2^{-32}$ c'est-à-dire 5,5 $10^{-9}$. Ainsi cet évènement surviendra en moyenne une fois tous les quatre cent ans en supposant douze heures d'opération par jour.

En variante, le système de communication décrit ci-dessus comporte un unique émetteur de communication.

Le domaine d'application du système de communication n'est pas limité aux applications du photovoltaïque et peut être étendus à d'autres applications dans lesquelles un bus de communication à courant porteur est disponible.

## Revendications

**1.** Système de communication bas débit à courant porteur continu modulé, destiné à acheminer des messages de données utiles, émis de manière asynchrone et à une fréquence moyenne depuis un ou une pluralité d'au moins deux émetteurs de communication vers un même récepteur au travers d'un bus filaire à courant continu porteur reliant entre eux et en série les émetteurs et le récepteur, comprenant

un ou une pluralité (4) d'aux moins deux émetteurs de communication (6,8),

un récepteur de communication (10),

un bus filaire (12) à courant porteur continu modulé formant un canal de transmission mis en commun et reliant entre eux les émetteurs de communication (6, 8) de la pluralité (4) et le récepteur de communication (10),

chaque émetteur de communication (6, 8) étant configuré pour former une première trame de transmission brute (202) sous la forme d'une première séquence d'un premier nombre constant Nt de donnés brutes binaires, encodées sur deux états pris parmi 0 et 1, la séquence de données brutes binaires formant la première trame (202) étant subdivisée en une adresse physique (206), unique et différente caractérisant l'émetteur, une charge utile (208), et un code détecteur d'erreur (210) de la première trame (202) déterminé à partir de la charge utile (208) et de l'adresse physique (206) de l'émetteur (6,8) de communication,

**caractérisé en ce que**

chaque émetteur de communication (6, 8) est configuré pour

étaler en fréquence selon un facteur d'étalement SF prédéterminé la première trame de transmission brute (202) en une deuxième trame de transmission étalée (212) en termes de spectre d'émission, la deuxième trame de transmission étalée (212) se présentant sous la forme d'une deuxième séquence de bribes et étant obtenue, en codant d'abord successivement les données brutes binaires de la première trame de transmission brute en des symboles de longueur un deuxième nombre prédéterminé Ns selon une règle de correspondance biunivoque entre l'ensemble de toutes les séquences possibles de données brutes binaires de longueur le deuxième nombre Ns et un ensemble de deux puissance Ns symboles, puis en codant ensuite chaque symbole obtenu en une séquence codante élémentaire distincte d'étalement (222, 224, 226, 228) formée de bribes binaires, encodées sur deux états pris parmi 0 et 1, la séquence élémentaire codante distincte d'étalement (222, 224, 226, 228) étant fonction du symbole et ayant pour longueur un même troisième nombre entier prédéterminé de bribes défini comme le facteur d'étalement SF, et

moduler et émettre sur le bus filaire (12) les bribes de la deuxième trame étalée (212) en un signal émis de communication selon une modulation prédéterminée, **en ce que**

chaque séquence codante élémentaire d'étalement est choisie parmi les séquences possibles de bribes, de longueur le facteur d'étalement SF, de sorte à former un code équilibré présentant un pic central d'auto corrélation ayant un premier niveau nettement élevé par rapport à deuxièmes niveaux des produits de corrélations ayant des décalages de corrélation dont la durée est supérieure ou égale à une période de bribe, **en ce que**

les séquences codantes élémentaires d'étalement des symboles utilisées par tous les émetteurs (4, 6) sont identiques, et **en ce que**

les instants d'émission de début des deuxièmes trames étalées (212) élaborées par chaque émetteur (6,8) sont déterminés de manière autonome et libre par chaque émetteur (6, 8), sans prise en compte d'un signal de synchronisation extérieur à l'émetteur (6, 8).

2. Système de communication bas débit à courant porteur continu selon la revendication 1, dans lequel
chaque émetteur (6, 8) comprend un module (156) associé, unique et différent, de création d'instants d'émission de début des deuxièmes trames étalées, aléatoirement ou pseudo aléatoirement distribués et séparés par un nombre rationnel supérieur ou égal à zéro de périodes de bribes, pour créer des intervalles de temps de longueurs variables séparant les deuxièmes trames étalées reçues provenant d'émetteurs différents (6, 8) et de désynchroniser les dites deuxièmes trames étalées reçues.

3. Système de communication bas débit à courant porteur continu selon l'une quelconque des revendications 1 à 2, dans lequel
le nombre de symboles, égal au nombre de séquences élémentaires, est compris dans l'ensemble des nombres entiers 2, 4, 8, et
le facteur d'étalement est supérieur ou égal à 4, de préférence égal à 16.

4. Système de communication bas débit à courant porteur continu selon l'une quelconque des revendications 1 à 3, dans lequel
l'ensemble des séquences codantes élémentaires consiste en un premier ensemble de séquences codantes élémentaires de base et en un deuxième ensemble de séquences codantes élémentaires ayant chacun le même cardinal,
chacune des séquences codantes élémentaires du deuxième ensemble étant la séquence codante complémentaire d'une séquence codante élémentaire de base correspondante du premier ensemble.

5. Système de communication bas débit à courant porteur selon l'une quelconque des revendications 1 à 4, dans lequel la modulation des bribes mise en oeuvre par les émetteurs de communication (6, 8) est une modulation de type à codage état fermé/état ouvert (OOK) selon laquelle à l'état 0 d'une bribe correspond sur le bus (12) un premier niveau de tension et à l'état 1 d'une bribe correspond sur le bus (12) un deuxième niveau de tension différent du premier.

6. Système de communication bas débit à courant porteur selon l'une quelconque des revendications 1 à 4, dans lequel chaque émetteur de communication (6, 8) comprend un générateur d'impulsions (402, 404, 406, 408) pour mettre en oeuvre la modulation des bribes sur le bus (12), et
le générateur d'impulsions (402, 404, 406, 408) est au choix un générateur de courant commandé (404), un générateur de tension commandé (402, 408), ou un modulateur d'impédance commandé (406).

7. Système de communication bas débit à courant porteur continu selon l'une quelconque des revendications 1 à 6, dans lequel le récepteur (10) est configuré pour
filtrer et amplifier un signal reçu de communication comme étant la somme des signaux de communication émis par les émetteurs de communication (6, 8) et acheminés en une entrée du récepteur de communication (10), et
échantillonner le signal reçu, dont la composante continue a été supprimée, en des échantillons de signal reçu suivant des instants d'échantillonnage répétés à au moins une fréquence égale au double de la fréquence d'émission des bribes, les instants d'échantillonnage se succédant selon un quatrième nombre prédéterminé Nphi, supérieur ou égal deux, de phases répétées cycliquement selon une période égale à la durée d'une bribe et repérée chacune par un rang de phase compris entre 1 et Nphi,

après chaque instant d'échantillonnage et à partir d'un nombre de premiers échantillons, précédents et de même rang de phase que celui de l'instant d'échantillonnage, égal au produit du spectre d'étalement SF fois le nombre total de données binaires Nt d'une trame divisé par la longueur Ns d'un symbole, déterminer une troisième trame brute de réception à l'aide d'une unité de corrélation à fenêtre de trame glissante (556, 558) et de l'ensemble des séquences élémentaires, puis

à partir de la troisième trame, vérifier si le code de détection d'erreur de la troisième trame déterminée détecte ou non la troisième trame erronée, et lorsque aucune erreur n'est détectée par le code détecteur d'erreur, extraire l'adresse d'émetteur et la comparer à une liste d'émetteurs prédéterminée (568).

8. Système de communication selon la revendication 7 dans laquelle l'unité de corrélation à fenêtre de trame glissante (556) du récepteur (10) est configurée pour

après chaque instant d'échantillonnage et à partir d'un nombre de premiers échantillons, précédents et de même rang de phase que celui de l'instant d'échantillonnage, égal au facteur d'étalement SF, calculer en parallèle sur un ensemble de répliques transformées de corrélation et sur l'ensemble des configurations de décalage possible de chaque réplique de corrélation transformée, les produits de corrélation possibles, les répliques transformées de corrélation étant soit obtenues par transformation respective des niveaux 0, 1 de l'ensemble des séquences codante d'étalement en les niveaux -1, 1, soit obtenues par transformation des niveaux 0,1 de la moitié des séquences codantes élémentaires d'émission de base dépourvues de complémentarité entre elles en les niveaux -1,1 lorsque les séquences élémentaires d'émission consiste en un premier ensemble de séquences codantes élémentaires de base et un deuxième ensemble de séquences codantes élémentaires complémentaires à celles de base du premier ensemble, et

détecter le symbole reçu comme étant le symbole correspondant à

soit à la séquence codante élémentaire associée à la réplique transformée de corrélation du produit de corrélation calculé ayant le niveau le plus élevé lorsque les cardinaux respectifs de l'ensemble des séquences élémentaires codantes et de l'ensemble des répliques transformées de corrélation sont égaux,

soit à la séquence codante élémentaire associée à la réplique transformée de corrélation du produit de corrélation calculé ayant le niveau le plus élevé positif lorsque le cardinal de l'ensemble des séquences élémentaires codantes est le double du cardinal de l'ensemble des répliques transformées de corrélation,

soit à la séquence codante élémentaire complémentaire de la séquence codante élémentaire de base associée à la réplique transformée de corrélation du produit de corrélation ayant le niveau le plus élevé négatif calculé lorsque le cardinal de l'ensemble des séquences codantes élémentaires est le double du cardinal de l'ensemble des répliques transformées de corrélation,

puis décoder le symbole en la séquence des Ns bits correspondants et entrer les données binaires dans un registre à décalage ayant pour longueur la longueur Nt d'une troisième trame.

9. Système de communication selon l'une quelconque des revendications 7 et 8, dans lequel la liste d'émetteurs prédéterminée (568) est une liste fournie et fixée au récepteur lors de son installation ou est une liste d'émetteurs construite à partir d'un filtrage statistique mis en oeuvre sur les adresses d'émetteur extraites des troisièmes trames pour lesquelles aucune erreur n'est détectée par le code détecteur d'erreur.

10. Procédé de communication bas débit par courant porteur continu modulé mis en oeuvre par un système de communication défini selon l'une quelconque des revendications 1 à 9, destiné à acheminer des messages de données utiles, émis de manière asynchrone et à une fréquence moyenne depuis un ou une pluralité (4) d'au moins deux émetteurs de communication (6,8) vers un même récepteur de communication au travers d'un bus filaire (12) à courant continu porteur reliant entre eux et en série les émetteurs de communication (6, 8) et le récepteur de communication (10), comprenant l'étape (704) consistant en ce que,

chaque émetteur forme une première trame de transmission brute sous la forme d'une première séquence d'un premier nombre constant Nt de donnés brutes binaires, encodées sur deux états pris parmi 0 et 1, la séquence de données brutes binaires formant la première trame étant subdivisée en une adresse unique et différente caractérisant l'émetteur, une charge utile, et un code détecteur d'erreur de la première trame déterminé à partir de la charge utile et de l'adresse de l'émetteur,

**caractérisé en ce que** le procédé comprend en outre les étapes consistant **en ce que**

chaque émetteur étale (706) en fréquence selon un facteur d'étalement SF prédéterminé la première trame de transmission brute en une deuxième trame de transmission étalée en termes de spectre d'émission, la deuxième trame de transmission étalée se présentant sous la forme d'une deuxième séquence de bribes et étant obtenue, en codant successivement d'abord les données brutes binaires de la première trame de transmission brute en des symboles de longueur un deuxième nombre prédéterminé Ns selon une règle de correspondance biunivoque entre l'ensemble de toutes les séquences possibles de données brutes binaires de longueur le deuxième nombre Ns et un ensemble de deux puissance Ns symboles, puis en codant chaque symbole obtenu en une séquence codante élémentaire distincte d'étalement formée de bribes binaires, encodées sur deux états pris parmi 0 et 1, la séquence codante élémentaire distincte d'étalement étant fonction du symbole et ayant pour longueur un même troisième nombre entier prédéterminé de bribes défini comme le facteur d'étalement SF, puis

chaque émetteur module et émet (708) sur le bus filaire les bribes de la deuxième trame étalée en un signal d'émetteur selon une modulation prédéterminée,

chaque séquence élémentaire d'émission étant choisie parmi les séquences possibles de bribes, de longueur le facteur d'étalement SF, de sorte à former un code équilibré présentant un pic central d'auto corrélation ayant un premier niveau nettement élevé par rapport à deuxièmes niveaux des produits de corrélations ayant des décalages de corrélation dont la durée est supérieure ou égale à une période de bribe, et

les séquences codantes élémentaires d'étalement des symboles utilisées par tous les émetteurs de communication étant indépendantes de l'émetteur de communication, et

les instants d'émission de début des deuxièmes trames étalées élaborées par chaque émetteur de communication étant déterminés de manière autonome et libre par chaque émetteur de communication sans prise en compte d'un signal de synchronisation extérieur à l'émetteur de communication.

**11.** Procédé de communication bas débit par courant porteur continu selon la revendication 10 dans lequel

le récepteur de communication (10) filtre et amplifie (710) un signal reçu de communication comme étant la somme des signaux émis de communication par les émetteurs (6, 8) et acheminés en une entrée du récepteur (10), et

le récepteur de communication (10) échantillonne le signal reçu de communication, dont la composante continue a été supprimée, en des échantillons de signal reçu suivant des instants d'échantillonnage répétés à au moins une fréquence égale au double de la fréquence d'émission des bribes, les instants d'échantillonnage se succédant selon un quatrième nombre prédéterminé Nphi, supérieur ou égal à deux, de phases répétées cycliquement selon une période égale à la durée d'une bribe et repérée chacune par un rang de phase compris entre 1 et Nphi, et

après chaque instant d'échantillonnage et à partir d'un nombre de premiers échantillons, précédents et de même rang de phase que celui de l'instant de l'instant d'échantillonnage, égal au produit du spectre d'étalement SF fois le nombre total de données binaires Nt d'une trame divisé par la longueur Ns d'un symbole, le récepteur détermine (714) une troisième trame brute de réception à l'aide d'une unité de corrélation à fenêtre de trame glissante et de l'ensemble des séquences élémentaires, puis

à partir de la troisième trame, le récepteur vérifie (716) si le code de détection d'erreur de la troisième trame déterminée détecte ou non la troisième trame erronée, et lorsque aucune erreur n'est détectée par le code détecteur d'erreur, le récepteur extrait l'adresse d'émetteur et la compare à une liste d'émetteurs prédéterminée.

**12.** Emetteur de communication destiné à être intégré dans un système défini selon l'une quelconque des revendications 1 à 10, comprenant

un premier module (152) de formation d'une première trame de transmission brute sous la forme d'une première séquence d'un premier nombre constant Nt de donnés brutes binaires, encodées sur deux états pris parmi 0 et 1, la séquence de données brutes binaires formant la première trame étant subdivisée en une adresse unique et différente caractérisant l'émetteur, une charge utile, et un code détecteur d'erreur de la première trame déterminé à partir de la charge utile et de l'adresse de l'émetteur,

**caractérisé en ce qu'**il comprend

un deuxième module (154) configuré pour étaler en fréquence selon un facteur d'étalement SF prédéterminé la première trame de transmission brute en une deuxième trame de transmission étalée en termes de spectre d'émission, la deuxième trame de transmission étalée se présentant sous la forme d'une deuxième séquence de bribes et étant obtenue, en codant d'abord successivement les données brutes binaires de la première trame de transmission brute en des symboles de longueur un deuxième nombre prédéterminé Ns selon une règle de correspondance biunivoque entre l'ensemble de toutes les séquences possibles de données brutes binaires de longueur le deuxième nombre Ns et un ensemble de deux puissance Ns symboles, puis en codant chaque symbole obtenu en une séquence codante élémentaire distincte d'étalement formée de bribes binaires, encodées sur deux états pris parmi 0 et 1, la séquence codante élémentaire distincte d'étalement étant fonction du symbole et ayant pour longueur un même troisième nombre entier prédéterminé de bribes défini comme le facteur d'étalement SF, et

un générateur d'impulsions (144) pour moduler et émettre sur le bus filaire les bribes de la deuxième trame étalée en un signal émis de communication selon une modulation prédéterminée,

chaque séquence élémentaire d'émission étant choisie parmi les séquences possibles de bribes, de longueur le facteur d'étalement SF, de sorte à former un code équilibré présentant un pic central d'auto corrélation ayant un premier niveau nettement élevé par rapport à deuxièmes niveaux des produits de corrélations ayant des décalages de corrélation dont la durée est supérieur à une période de bribe, et

les instants de début d'émission des deuxièmes trames élaborées par l'émetteur étant déterminés de manière autonome et libre par chaque émetteur sans prise en compte d'un signal de synchronisation extérieur à l'émetteur.

13. Récepteur de communication destiné à être intégré dans un système défini selon l'une quelconque des revendications 1 à 10, comprenant

une tête analogique (514) de filtrage et d'amplification d'un signal reçu de communication comme étant la somme des signaux émis de communication par les émetteurs de communication et acheminés en une entrée du récepteur, et une unité d'échantillonnage (516) du signal reçu, dont la composante continue a été supprimée par la tête analogique (514), en des échantillons de signal reçu suivant des instants d'échantillonnage répétés à au moins une fréquence de Nyquist sensiblement égale au double de la fréquence d'émission des bribes, les instants d'échantillonnage se succédant selon un quatrième nombre prédéterminé Nphi, supérieur ou égal deux, de phases répétées cycliquement selon une période égale à la durée d'une bribe et repérée chacune par un rang de phase compris entre 1 et Nphi, une unité de traitement (518) configurée pour

après chaque instant d'échantillonnage et à partir d'un nombre de premiers échantillons, précédents et de même rang de phase que celui de l'instant de l'instant d'échantillonnage, égal au produit du spectre d'étalement SF fois le nombre total de données binaires N d'une trame divisé par la longueur Ns d'un symbole, déterminer une troisième trame brute de réception à l'aide d'une unité de corrélation à fenêtre de trame glissante (556, 558) et de l'ensemble des séquences élémentaires, puis

à partir de la troisième trame, vérifier si le code de détection d'erreur de la troisième trame déterminée détecte ou non la troisième trame erronée, et lorsque aucune erreur n'est détectée par le code détecteur d'erreur, extraire l'adresse d'émetteur et la comparer à une liste d'émetteurs prédéterminée.

14. Produit programme d'ordinateur comprenant des instructions de code de programme pour mettre en oeuvre les étapes du procédé de communication défini selon l'une quelconque des revendications 10 à 11 lorsque ledit programme fonctionne sur un ou plusieurs calculateur numériques du système de communication défini selon l'une quelconque des revendications 1 à 9.

## Patentansprüche

1. Kommunikationssystem niedriger Datenrate mit moduliertem Trägergleichstrom, das vorgesehen ist, Nutzdatennachrichten weiterzuleiten, die in asynchroner Weise und bei einer mittleren Frequenz von einem oder einer Mehrzahl von mindestens zwei Kommunikationssendern zu einem selben Empfänger über einen Trägergleichstrom-Leitungsbus, der die Sender und den Empfänger untereinander und in Reihe verbindet, gesendet werden, umfassend

einen oder eine Mehrzahl (4) von mindestens zwei Kommunikationssendern (6, 8),
einen Kommunikationsempfänger (10),
einen Leitungsbus (12) mit moduliertem Trägergleichstrom, der einen gemeinsamen und die Kommunikationssender (6, 8) der Mehrzahl (4) und den Kommunikationsempfänger (10) untereinander verbindenden Übertragungskanal bildet,
wobei jeder Kommunikationssender (6, 8) ausgebildet ist, einen ersten unbearbeiteten Übertragungsrahmen (202) in Form einer ersten Sequenz einer ersten konstanten Zahl Nt von binären und in zwei Zuständen von 0 und 1 kodierten Rohdaten zu bilden, wobei die Sequenz von binären, den ersten Rahmen (202) bildenden Rohdaten in eine physische, einzigartige und unterschiedliche, den Sender charakterisierende Adresse, in Nutzdaten (208) und einen Fehlererkennungscode (210) des ersten Rahmens (202), der aus den Nutzdaten (208) und der physischen Adresse (206) des Kommunikationssenders (6, 8) bestimmt ist, aufgeteilt ist,
**dadurch gekennzeichnet, dass**
jeder Kommunikationssender (6, 8) ausgebildet ist,
den ersten unbearbeiteten Übertragungsrahmen (202) hinsichtlich der Frequenz gemäß einem vorbestimmten Spreizfaktor SF in einen gespreizten zweiten Übertragungsrahmen (212) als Emissionsspektrum zu spreizen, wobei der zweite gespreizte Übertragungsrahmen (212) sich in Form einer zweiten Chipsequenz darstellt und erhalten wird, indem zuerst aufeinanderfolgend die binären Rohdaten des ersten unbearbeiteten Übertragungsrahmens in Symbole einer Länge einer zweiten vorbestimmten Zahl Ns gemäß einer Eins-zu-Eins-Korrespondenzregel zwischen der Gesamtheit aller möglichen Sequenzen von binären Rohdaten der Länge der zweiten Zahl Ns und einer Gesamtheit von zwei hoch Ns Symbolen codiert werden, dann indem jedes Symbol, das als eine codierende elementare distinkte Spreizsequenz (222, 224, 226, 228) aus binären Chips, codiert auf zwei Zustände, 0 und 1, erhalten wird, codiert wird, wobei die elementare codierende distinkte Spreizsequenz (222, 224, 226, 228) eine Funktion des Symbols ist und als Länge eine gleiche dritte vorbestimmte ganze Zahl an Chips, die als Spreizfaktor definiert ist, aufweist, und

die Chips des zweiten gespreizten Rahmens (212) zu modulieren und als ein Kommunikationssendesignal gemäß einer vorbestimmten Modulation auf dem Leitungsbus (12) zu senden, dass

jede elementare codierende Spreizsequenz ausgewählt ist aus den möglichen Chipsequenzen der Länge des Spreizfaktors SF, derart, dass ein ausgeglichener Code gebildet wird, der einen zentralen Autokorrelationspeak mit einem ersten merkbar erhöhten Niveau in Bezug auf zweite Niveaus der Korrelationsprodukte, die Korrelationsverschiebungen aufweisen, deren Dauer größer oder gleich einer Chipperiode ist, aufweist, dass

die elementaren codierenden Spreizsequenzen der Symbole, die von allen Sendern (4, 6) verwendet werden, identisch sind und dass

die Anfangssendezeitpunkte der zweiten Spreizrahmen (212), die von jedem Sender (6, 8) erstellt werden, auf autonome und freie Weise von jedem Sender (6, 8) bestimmt werden, ohne Einbeziehung eines äußeren Synchronisationssignals für den Sender (6, 8).

2. Kommunikationssystem niedriger Datenrate mit Trägergleichstrom nach Anspruch 1, bei dem

jeder Sender (6, 8) ein zugeordnetes, einzigartiges und unterschiedliches Modul (156) zur Erzeugung der Anfangssendezeitpunkte der zweiten Spreizrahmen, zufällig oder pseudozufällig verteilt und getrennt durch eine rationale Zahl, größer oder gleich null, von Chipperioden, um Zeitintervalle von variablen Längen zu erzeugen, die die zweiten empfangenen und von unterschiedlichen Sendern (6, 8) kommenden Spreizrahmen trennen, und diese empfangenen zweiten Spreizrahmen zu desynchronisieren.

3. Kommunikationssystem niedriger Datenrate mit Trägergleichstrom nach einem beliebigen der Ansprüche 1 und 2, bei dem

die Zahl der Symbole, gleich der Zahl der Elementarsequenzen, in der Gesamtheit der ganzen Zahlen 2, 4, 8 liegt und

der Spreizfaktor größer oder gleich 4 ist, vorzugsweise gleich 16 ist.

4. Kommunikationssystem niedriger Datenrate mit Trägergleichstrom nach einem beliebigen der Ansprüche 1 bis 3, bei dem die Gesamtheit der elementaren codierenden Sequenzen aus einer ersten Gesamtheit von elementaren codierenden Grundsequenzen und einer zweiten Gesamtheit von elementaren codierenden Sequenzen, von denen jede die gleiche Kardinalzahl aufweist, besteht, jede der elementaren codierenden Sequenzen der zweiten Gesamtheit die komplementäre codierende Sequenz einer korrespondierenden elementaren codierenden Grundsequenz der ersten Gesamtheit ist.

5. Kommunikationssystem niedriger Datenrate mit Trägergleichstrom nach einem beliebigen der Ansprüche 1 bis 4, bei dem die Modulation der Chips, die von den Kommunikationssendern (6, 8) ausgeführt wird, eine Modulation der Amplitudenumtastung (OOK) ist, nach der der Zustand 0 eines Chips auf dem Bus (12) einem ersten Spannungsniveau und der Zustand 1 eines Chips auf dem Bus (12) einem zweiten Spannungsniveau, unterschiedlich zum ersten, entspricht.

6. Kommunikationssystem niedriger Datenrate mit Trägergleichstrom nach einem beliebigen der Ansprüche 1 bis 4, bei dem jeder Kommunikationssender (6, 8) einen Impulsgenerator (402, 404, 406, 408) umfasst, um die Modulation der Chips auf dem Bus (12) durchzuführen, und

der Impulsgenerator (402, 404, 406, 408) wahlweise ein stromgesteuerter Generator (404), ein spannungsgesteuerter Generator (402, 408) oder ein gesteuerter Impedanzmodulator (406) ist.

7. Kommunikationssystem niedriger Datenrate mit Trägergleichstrom nach einem beliebigen der Ansprüche 1 bis 6, bei dem der Empfänger (10) ausgebildet ist

ein empfangenes Kommunikationssignal so zu filtern und zu verstärken als sei es die Summe der Kommunikationssignale, die von den Kommunikationssendern (6, 8) gesendet werden und zu einem Eingang des Kommunikationsempfängers (10) geleitet werden, und

das empfangene Signal, dessen Gleichkomponente unterdrückt wurde, abzutasten in Abtastungen des empfangenen Signals gemäß Abtastzeitpunkten, die bei mindestens einer Frequenz gleich dem Doppelten der Sendefrequenz der Chips wiederholt werden, wobei die Abtastzeitpunkte gemäß einer vierten vorbestimmten Zahl Nphi, größer oder gleich zwei, in zyklisch wiederholten Phasen gemäß einer Periode gleich der Dauer eines Chips und jeweils identifiziert durch einen Phasenrang zwischen 1 und Nphi aufeinanderfolgen,

einen dritten unbearbeiteten Empfangsrahmen mittels einer Korrelationseinheit mit gleitendem Rahmenfenster (556, 558) und der Gesamtheit der elementaren Sequenzen nach jedem Abtastzeitpunkt und aus einer Anzahl von ersten Abtastungen, vorausgehend zu und vom gleichen Phasenrang wie dem des Abtastzeitpunkts, gleich dem Produkt des Spreizspektrums SF mal der Gesamtzahl der binären Daten Nt eines Rahmens, dividiert durch die Länge Ns eines Symbols, zu bestimmen, dann

aus dem dritten Rahmen zu verifizieren, ob der Fehlererkennungscode des bestimmten dritten Rahmens den fehlerhaften dritten Rahmen detektiert oder nicht und wenn kein Fehler durch den Fehlererkennungscode detektiert wird, die Adresse des Senders zu extrahieren und dieselben mit einer vorbestimmten Senderliste (568) zu vergleichen.

8. Kommunikationssystem nach Anspruch 7, bei dem Korrelationseinheit mit gleitendem Rahmenfenster (556) des Empfängers (10) ausgebildet ist,

nach jedem Abtastzeitpunkt und aus einer Anzahl von ersten Abtastungen, vorausgehend zu dem und vom selben Phasenrang wie dem des Abtastzeitpunkts, gleich dem Spreizfaktor SF, parallel über eine Gesamtheit von transformierten Korrelationsantworten und über die Gesamtheit der möglichen Verschiebungskonfigurationen jeder transformierten Korrelationsantwort die möglichen Korrelationsprodukte zu berechnen, wobei die transformierten Korrelationsantworten, sei es durch die jeweilige Transformation der Niveaus 0, 1 der Gesamtheit der codierenden Spreizsequenzen in die Niveaus -1, 1, sei es durch Transformation der Niveaus 0, 1 der Hälfte der elementaren codierenden Grundsendesequenzen, die keine Komplementarität untereinander zu den Niveaus -1, 1 haben, erhalten werden, wenn die elementaren Sendesequenzen aus einer ersten Gesamtheit von elementaren codierenden Grundsequenzen und einer zweiten Gesamtheit von elementaren codierenden Sequenzen, komplementär zu denen der Grundsequenzen der ersten Gesamtheit bestehen, und das empfangene Symbol als Symbol zu detektieren korrespondierend zu

sei es der elementaren codierenden Sequenz, die der transformierten Korrelationsantwort des berechneten Korrelationsprodukts, die das höchste Niveau aufweist, zugeordnet ist, wenn die jeweiligen Kardinalzahlen der Gesamtheit von elementaren codierenden Sequenzen und der Gesamtheit der transformierten Korrelationsantworten gleich sind,

sei es der elementaren codierenden Sequenz, die der transformierten Korrelationsantwort des berechneten Korrelationsprodukts, die das höchste positive Niveau aufweist, zugeordnet ist, wenn die Kardinalzahl der Gesamtheit der elementaren codierenden Sequenzen das Doppelte der Kardinalzahl der Gesamtheit der transformierten Korrelationsantworten ist,

sei es der elementaren codierenden Sequenz komplementär zu der elementaren codierenden Grundsequenz, die der transformierten Korrelationsantwort des Korrelationsprodukts, die das höchste berechnete negative Niveau aufweist, zugeordnet ist, wenn die Kardinalzahl der Gesamtheit der elementaren codierenden Sequenzen das Doppelte der Kardinalzahl der Gesamtheit der transformierten Korrelationsantworten ist, dann das Symbol in die Sequenz der korrespondierenden Ns Bits zu decodieren und die binären Daten in ein Schieberegister einzugeben, das als Länge die Länge Nt eines dritten Rahmens aufweist.

9. Kommunikationssystem nach einem beliebigen der Ansprüche 7 und 8, bei dem die vorbestimmte Senderliste (568) eine Liste ist, die dem Empfänger bei seiner Installation geliefert wird und dort festgelegt ist, oder eine Sendeliste ist, die aus einer statistischen Filterung konstruiert wird, die über die Senderadressen durchgeführt wird, die aus den dritten Rahmen extrahiert sind, für die kein Fehler von dem Fehlererkennungscode detektiert wurde.

10. Kommunikationsverfahren niedriger Datenrate mit moduliertem Trägergleichstrom, ausgeführt durch ein Kommunikationssystem, das nach einem beliebigen der Ansprüche 1 bis 9 definiert ist und vorgesehen ist, Nutzdatennachrichten weiterzuleiten, die in asynchroner Weise und bei einer mittleren Frequenz von einem oder einer Mehrzahl (4) von mindestens zwei Kommunikationssendern (6, 8) zu einem selben Empfänger über einen Trägergleichstrom-Leitungsbus (12), der die Kommunikationssender (6, 8) und den Kommunikationsempfänger (10) untereinander und in Reihe verbindet, gesendet werden, darin bestehend, dass

jeder Sender einen ersten unbearbeiteten Übertragungsrahmen in Form einer ersten Sequenz einer ersten konstanten Zahl Nt von binären und in zwei Zuständen von 0 und 1 kodierten Rohdaten bildet, wobei die Sequenz von binären, den ersten Rahmen (202) bildenden Rohdaten in eine physische, einzigartige und unterschiedliche, den Sender charakterisierende Adresse, in Nutzdaten und einen Fehlererkennungscode des ersten Rahmens, der aus den Nutzdaten und der physischen Adresse des Senders bestimmt ist, aufgeteilt ist,

**dadurch gekennzeichnet, dass** das Verfahren außerdem die Schritte umfasst, die darin bestehen, dass jeder Sender den ersten unbearbeiteten Übertragungsrahmen hinsichtlich der Frequenz gemäß einem vorbestimmten Spreizfaktor SF in einen gespreizten zweiten Übertragungsrahmen als Emissionsspektrum spreizt (706), wobei der zweite gespreizte Übertragungsrahmen sich in Form einer zweiten Chipsequenz darstellt und erhalten wird, indem zuerst aufeinanderfolgend die binären Rohdaten des ersten unbearbeiteten Übertragungsrahmens in Symbole einer Länge einer zweiten vorbestimmten Zahl Ns gemäß einer Eins-zu-Eins-Korrespondenzregel zwischen der Gesamtheit aller möglichen Sequenzen von binären Rohdaten der Länge der zweiten Zahl Ns und einer Gesamtheit von zwei Bit Ns Symbolen codiert werden, dann indem jedes Symbol, das als eine codierende elementare distinkte Spreizsequenz aus binären Chips, codiert auf zwei Zustände, 0 und 1, erhalten wird, codiert wird, wobei die elementare codierende distinkte Spreizsequenz eine Funktion des Symbols ist und als Länge eine gleiche dritte vorbestimmte ganze Zahl an Chips, die als Spreizfaktor definiert ist, aufweist, und jeder Sender die Chips des zweiten gespreizten Rahmens moduliert und als ein Sendesignal gemäß einer vorbestimmten Modulation auf dem Leitungsbus sendet (708),

jede elementare codierende Spreizsequenz ausgewählt ist aus den möglichen Chipsequenzen der Länge des Spreizfaktors SF, derart, dass ein ausgeglichener Code gebildet wird, der einen zentralen Autokorrelationspeak mit einem ersten merkbar erhöhten Niveau in Bezug auf zweite Niveaus der Korrelationsprodukte, die Korrelationsverschiebungen aufweisen, deren Dauer größer oder gleich einer Chipperiode ist, aufweist,

wobei die elementaren codierenden Spreizsequenzen der Symbole, die von allen Sendern verwendet werden, unabhängig vom Kommunikationsender sind, und

die Anfangssendezeitpunkte der zweiten Spreizrahmen (212), die von jedem Kommunikationssender erstellt werden, auf autonome und freie Weise von jedem Kommunikationssender bestimmt werden, ohne Einbeziehung eines äußeren Synchronisationssignals für den Kommunikationssender.

11. Kommunikationsverfahren niedriger Datenrate mit Trägergleichstrom nach Anspruch 10, bei dem

der Kommunikationsempfänger (10) ein empfangenes Kommunikationssignal so filtert und verstärkt (710) als sei es die Summe der Kommunikationssignale, die von den Sendern (6, 8) gesendet und zu einem Eingang des Empfängers (10) geleitet werden, und

der Kommunikationsempfänger (10) das empfangene Signal, dessen Gleichkomponente unterdrückt wurde, abtastet in Abtastungen des empfangenen Signals gemäß Abtastzeitpunkten, die bei mindestens einer Frequenz gleich dem Doppelten der Sendefrequenz der Chips wiederholt werden, wobei die Abtastzeitpunkte gemäß einer vierten vorbestimmten Zahl Nphi, größer oder gleich zwei, in zyklisch wiederholten Phasen gemäß einer Periode gleich der Dauer eines Chips und jeweils eingeschränkt durch einen Phasenrang zwischen 1 und Nphi, aufeinanderfolgen

der Empfänger einen dritten unbearbeiteten Empfangsrahmen mittels einer Korrelationseinheit mit gleitendem Rahmenfenster und der Gesamtheit der elementaren Sequenzen, nach jedem Abtastzeitpunkt und aus einer Anzahl von ersten Abtastungen, vorausgehend zu und vom gleichen Phasenrang wie dem des Abtastzeitpunkts, gleich dem Produkt des Spreizspektrums SF mal der Gesamtzahl der binären Daten Nt eines Rahmens, dividiert durch die Länge Ns eines Symbols, bestimmt (714), dann

der Empfänger aus dem dritten Rahmen verifiziert, ob der Fehlererkennungscode des bestimmten dritten Rahmens den fehlerhaften dritten Rahmen detektiert oder nicht und wenn kein Fehler durch den Fehlererkennungscode detektiert wird, die Adresse des Senders extrahiert und dieselben mit einer vorbestimmten Senderliste (568) vergleicht.

12. Kommunikationssender, der vorgesehen ist, in ein System nach einem beliebigen der Ansprüche 1 bis 10 integriert zu werden, umfassend ein erstes Modul (152) zur Bildung eines ersten unbearbeiteten Übertragungsrahmens in einer ersten Sequenz einer ersten konstanten Zahl Nt von binären und in zwei Zuständen von 0 und 1 kodierten Rohdaten zu bilden, wobei die Sequenz von binären, den ersten Rahmen bildenden Rohdaten in eine physische, einzigartige und unterschiedliche, den Sender charakterisierende Adresse, in Nutzdaten und einen Fehlererkennungscode des ersten Rahmens, der aus den Nutzdaten und der physischen Adresse des Senders bestimmt ist, aufgeteilt ist,

**dadurch gekennzeichnet, dass** er umfasst

ein zweites Modul (154), das ausgebildet ist, den ersten unbearbeiteten Übertragungsrahmen hinsichtlich der Frequenz gemäß einem vorbestimmten Spreizfaktor SF in einen gespreizten zweiten Übertragungsrahmen als Emissionsspektrum zu spreizen, wobei der zweite gespreizte Übertragungsrahmen sich in Form einer zweiten Chipsequenz darstellt und erhalten wird, indem zuerst aufeinanderfolgend die binären Rohdaten des ersten unbearbeiteten Übertragungsrahmens in Symbole einer Länge einer zweiten vorbestimmten Zahl Ns gemäß einer Eins-zu-Eins-Korrespondenzregel zwischen der Gesamtheit aller möglichen Sequenzen von binären Rohdaten der Länge der zweiten Zahl Ns und einer Gesamtheit von zwei Bit Ns Symbolen codiert werden, dann indem jedes Symbol, das als eine codierende elementare distinkte Spreizsequenz aus binären Chips, codiert auf zwei Zustände, 0 und 1, erhalten wird, codiert wird, wobei die elementare codierende distinkte Spreizsequenz eine Funktion des Symbols ist und als Länge eine gleiche dritte vorbestimmte ganze Zahl an Chips, die als Spreizfaktor definiert ist, aufweist, und

einen Impulsgenerator (144), um die Chips des zweiten gespreizten Rahmens (212) zu modulieren und als ein Kommunikationssendesignal gemäß einer vorbestimmten Modulation auf dem Leitungsbus zu senden, wobei jede elementare codierende Spreizsequenz ausgewählt ist aus den möglichen Chipsequenzen der Länge des Spreizfaktors SF, derart, dass ein ausgeglichener Code gebildet wird, der einen zentralen Autokorrelationspeak mit einem ersten merkbar erhöhten Niveau in Bezug auf zweite Niveaus der Korrelationsprodukte, die Korrelationsverschiebungen aufweisen, deren Dauer größer oder gleich einer Chipperiode ist, aufweist, und

die Anfangssendezeitpunkte der zweiten Spreizrahmen, die von dem Sender erstellt werden, auf autonome und freie Weise von jedem Sender bestimmt werden, ohne Einbeziehung eines äußeren Synchronisationssignals für den Sender.

**13.** Kommunikationsempfänger, der vorgesehen ist, in ein System gemäß einem der Ansprüche 1 bis 10 integriert zu werden, umfassend

ein analoges Kopfteil (514) zur Filterung und Verstärkung eines empfangenen Kommunikationssignals als Summe der von den Kommunikationssendern gesendeten und zu dem Eingang des Empfängers geleiteten Kommunikationssignalen, und

eine Einheit (516) zum Abtasten des empfangenen Signals, dessen Gleichkomponente von dem analogen Kopfteil (514) unterdrückt wurde, zu Abtastungen des empfangenen Signals gemäß Abtastzeitpunkten, die bei mindestens einer Nyquistfrequenz gleich dem Doppelten der Sendefrequenz der Chips wiederholt werden, wobei die Abtastzeitpunkte gemäß einer vierten vorbestimmten Zahl Nphi, größer oder gleich zwei, in zyklisch wiederholten Phasen gemäß einer Periode gleich der Dauer eines Chips und jeweils identifiziert durch einen Phasenrang zwischen 1 und Nphi aufeinanderfolgen,

eine Verarbeitungseinheit (518), die ausgebildet ist,

einen dritten unbearbeiteten Empfangsrahmen mittels einer Korrelationseinheit mit gleitendem Rahmenfenster (556, 558) und der Gesamtheit der elementaren Sequenzen nach jedem Abtastzeitpunkt und aus einer Anzahl von ersten Abtastungen, vorausgehend zu und vom gleichen Phasenrang wie dem des Abtastzeitpunkts, gleich dem Produkt des Spreizspektrums SF mal der Gesamtzahl der binären Daten Nt eines Rahmens, dividiert durch die Länge Ns eines Symbols, zu bestimmen, dann

aus dem dritten Rahmen zu verifizieren, ob der Fehlererkennungscode des bestimmten dritten Rahmens den fehlerhaften dritten Rahmen detektiert oder nicht und wenn kein Fehler durch den Fehlererkennungscode detektiert wird, die Adresse des Senders zu extrahieren und dieselben mit einer vorbestimmten Senderliste (568) zu vergleichen.

**14.** Computerprogrammprodukt, umfassend Programmcodebefehle zum Durchführen der Schritte des Kommunikationsverfahrens, das gemäß einem beliebigen der Ansprüche 10 bis 11 definiert ist, wenn das Programm auf einem oder mehreren numerischen Rechnern des Kommunikationssystems arbeitet, das nach einem beliebigen der Ansprüche 1 bis 9 definiert ist.

**Claims**

**1.** A system for low data-rate communication over a modulated direct carrier current, designed to convey payload messages, transmitted asynchronously and at an average frequency from one or a plurality of at least two communication transmitters to a same receiver, through a wire bus using direct carrier current connecting the transmitters and the receiver to each other in series, comprising

one or a plurality (4) of at least two communication transmitters (6, 8),

a communication receiver (10),

a wire bus (12) with modulated direct carrier current forming a shared transmission channel and connecting the communication transmitters (6, 8) from the plurality (4) and the communication receiver (10),

each communication transmitter (6, 8) being configured to form a first raw transmission frame (202) in the form of a first sequence of a first constant number Nt of binary raw data, encoded over two states chosen from among 0 and 1, the binary raw data sequence forming the first frame (202) being subdivided into a unique and different physical address (206) characterizing the transmitter, a payload (208), and an error detecting code (210) on the first frame (202) determined from the payload (208) and the physical address (206) of the communication transmitter (6, 8), **characterized in that**

each communication transmitter (6, 8) is configured to

spread in frequency, by a predetermined spreading factor SF, the first raw transmission frame (202) in a second transmission frame (212) spread in terms of transmission spectrum, the second spread transmission frame (212) assuming the form of a second sequence of chips and being obtained, by first successively encoding the binary raw data of the first raw transmission frame into symbols with a length of a second predetermined number Ns according to a bijective correspondence rule between the set of all possible sequences of binary raw data with length the second number Ns and a set of two to the power Ns symbols, then next by encoding each obtained symbol in a distinct spreading elementary encoding sequence (222, 224, 226, 228) formed by binary chips, encoded over two states chosen from among 0 and 1, the distinct elementary encoding sequence (222, 224, 226, 228) for spreading depending on the symbol and having for length, a third predetermined integer number of chips defined as the spreading factor SF, and

modulating and transmitting, over the wire bus (12), the chips of the second spread frame (212) in a transmitted communication signal according to a predetermined modulation, **in that**

each elementary spreading sequence is chosen from among the possible chip sequences, with spreading factor SF as length, so as to form a balanced code having a central autocorrelation peak having a first level that is clearly higher than that second levels of the correlation products having correlation shifts, the duration of which is greater than or equal to a chip period, **in that**

the elementary encoding sequences for spreading the symbols used by all of the transmitters (4, 6) are identical, and **in that**

the times of the initial transmission of the second spread frames (212) developed by each transmitter (6, 8) are autonomously and freely determined by each transmitter (6, 8), without taking a synchronization signal outside the transmitter into account (6, 8).

2. The system for low data-rate communication over a carrier current according to claim 1, wherein each transmitter (6, 8) comprises a unique and different associated module (156) for creating times of the initial transmission of the second spread frames, randomly or pseudo-randomly distributed and separated by a rational number of chip periods greater than or equal to zero, to create time intervals with variable lengths separating the second spread frames coming from different transmitters (6, 8) and desynchronize said received second spread frames.

3. The system for low data-rate communication over a carrier current according to any one of claims 1 to 2, wherein the number of symbols, equal to the number of elementary sequences, is comprised in the set of integers 2, 4, 8, and the spreading factor is greater than or equal to 4, preferably equal to 16.

4. The system for low data-rate communication over a carrier current according to any one of claims 1 to 3, wherein the set of elementary encoding sequences consists of a first set of basic elementary encoding sequences and a second set of elementary encoding sequences each having the same cardinal, each of the elementary encoding sequences of the second set being the complementary encoding sequence of a basic elementary encoding sequence corresponding to the first set.

5. The system for low data-rate communication over a carrier current according to any one of claims 1 to 4, wherein the modulation of the chips implemented by the communication transmitters (6, 8) is a modulation of the off/on keying (OOK) type according to which the 0 state of a chip corresponds to a first voltage level on the bus (12), and the 1 state of the chip corresponds to a second voltage level different from the first on the bus (12).

6. The system for low data-rate communication over a carrier current according to any one of claims 1 to 4, wherein each communication transmitter (6, 8) comprises a pulse generator (402, 404, 406, 408) to implement the modulation of the chips on the bus (12), and the pulse generator (402, 404, 406, 408) may be chosen to be a current controlled generator (404), a voltage controlled generator (402, 408), or an impedance controlled modulator (406).

7. The system for low data-rate communication over a carrier current according to any one of claims 1 to 6, wherein the receiver (10) is configured to

filter and amplify a received communication signal as being the sum of the communication signals emitted by the communication transmitters (6, 8) and conveyed to an input of the communication receiver (10), and

sampling the received signal, the direct component of which has been eliminated, in received signal samples according to sampling moments repeated at least at a frequency equal to twice the transmission frequency of the chips, the sampling moments following one another according to a fourth predetermined number Nphi, greater than or equal to two, of phases repeated cyclically according to a period equal to the duration of the chip and each identified by a phase rank comprised between 1 and Nphi,

after each sampling moment and from a number of previous first samples with the same phase rank as that of the sampling moment, equal to the product of the spreading spectrum SF times the total number of binary data Nt of a frame divided by the length Ns of a symbol, determining a third raw reception frame using a sliding frame window correlation unit (556, 558) and the set of elementary sequences, then

from the third frame, verifying whether the error detection code of the third determined frame detects the third erroneous frame, and when no error is detected by the error detection code, extracting the transmitter's address and comparing it to a predetermined list of transmitters (568).

8. The communication system according to claim 7, the sliding frame window correlation unit (556) of the receiver (10) is configured to

after each sampling moment and from a number of previous first samples, with the same phase rank as that of the sampling moment, equal to the spreading factor SF, compute, in parallel over a set of transformed correlation replicas and over the set of possible shift configurations for each transform correlation replica, the possible correlation products, the transformed correlation replicas either being obtained by respective transformation of levels 0, 1 of the set of spreading encoding sequences into levels -1, 1, or obtained by transforming the levels 0, 1 of half of the basic elementary transmission encoding sequences with no complementarity between them into levels -1, 1 when the elementary transmission sequences consist of a first set of basic elementary encoding sequences and a second set of elementary encoding sequences complementary to the basic ones of the first set, and

detecting the received symbol as being the symbol corresponding to

either the elementary encoding sequence associated with the transformed correlation replica of the computed correlation product having the highest level when the respective cardinals of the set of encoding elementary sequences and the set of transformed correlation replicas are equal,

or the elementary encoding sequence associated with the transformed correlation replica of the computed correlation product having the highest positive level when the cardinal of the set of elementary encoding sequences is twice the cardinal of the set of transformed correlation replicas,

or the complementary elementary encoding sequence of the basic elementary encoding sequence associated with the transformed correlation replica of the correlation product having the highest negative level calculated when the cardinal of the set of elementary encoding sequences is twice the cardinal of the set of transformed correlation replicas,

then decoding the symbol in the sequence of Ns corresponding bits and entering the binary data in a shift register having the length Nt of a third frame as its length.

9. The communication system according to any one of claims 7 and 8, wherein the list of predetermined transmitters (568) is a list provided and determined at the receiver when it is installed or is a list of transmitters built from statistical filtering implemented on the transmitter addresses extracted from the third frames for which no error is detected by the error detection code.

10. A method for low data-rate communication over a modulated direct carrier current implemented by a communication system according to any one of claims 1 to 9, designed to convey payload messages, transmitted asynchronously and at an average frequency from one or a plurality (4) of at least two communication transmitters (6, 8) to a same communication receiver through a wire bus (12) using direct carrier current connecting the communication transmitters (6, 8) and the communication receiver (10) to each other in series, comprising step (704) consisting of the following:

each communication transmitter forms a first raw transmission frame in the form of a first sequence of a first constant number Nt of binary raw data, encoded over two states chosen from among 0 and 1, the binary raw data sequence forming a first frame being subdivided into a unique and different address characterizing the transmitter, a payload, and an error detecting code on the first frame determined from the payload and the address of the transmitter,

**characterized in that** the method further comprises the following steps:

each transmitter spreads (706) in frequency, by a predetermined spreading factor SF, the first raw transmission frame in a second transmission frame spread in terms of transmission spectrum, the second spread transmission frame assuming the form of a second sequence of chips and being obtained, by first successively encoding the binary raw data of the first raw transmission frame into symbols with a length of a second predetermined number Ns according to a bijective correspondence rule between the set of all possible sequences of binary raw data with length the second number Ns and a set of two to the power Ns symbols, then by including each obtained symbol in a distinct spreading elementary encoding sequence formed by binary chips, encoded over two states chosen from among 0 and 1, the distinct elementary encoding sequence for spreading depending on the symbol and having for length, a third predetermined integer number of chips defined as the spreading factor SF, then

each transmitter modulates and transmits (708), over the wire bus, the chips of the second spread frame in a transmitter signal according to a predetermined modulation,

each elementary transmission sequence being chosen from among the possible chip sequences, with spreading factor SF length, so as to form a balanced code having a central autocorrelation peak having a first level that is clearly higher than that second levels of the correlation products having correlation shifts, the duration of which is greater than or equal to a chip period, and

the elementary encoding sequences for spreading the symbols used by all of the communication transmitters being independent of the communication transmitter, and

the times of the initial transmission of the second spread frames developed by each communication transmitter being autonomously and freely determined by each communication transmitter, without taking a synchronization signal outside the communication transmitter into account.

11. The method for low data-rate communication over a carrier current according to claim 10, wherein

the communication receiver (10) filters and amplifies (710) a received communication signal as being the sum of the communication signals emitted by the transmitters (6, 8) and conveyed to an input of the receiver (10), and

the communication receiver (10) samples the received communication signal, the direct component of which has been eliminated, in received signal samples according to sampling moments repeated at least at a frequency equal to twice the transmission frequency of the chips, the sampling moments following one another according to a fourth predetermined number Nphi, greater than or equal to two, of phases repeated cyclically according to a period equal to the duration of the chip and each identified by a phase rank comprised between 1 and Nphi, and

after each sampling moment and from a number of previous first samples with the same phase rank as that of the sampling moment, equal to the product of the spreading spectrum SF times the total number of binary data Nt of a frame divided by the length Ns of a symbol, the receiver determines (714) a third raw reception frame using a sliding frame window correlation unit and the set of elementary sequences, then

from the third frame, the receiver verifies (716) whether the error detection code of the third determined frame detects the third erroneous frame, and when no error is detected by the error detection code, the receiver extracts the transmitter's address and compares it to a predetermined list of transmitters.

12. A communication transmitter designed to be integrated into a system defined according to any one of claims 1 to 10, comprising

a first module (152) for forming a first raw transmission frame in the form of a first sequence of a first constant number Nt of binary raw data, encoded over two states chosen from among 0 and 1, the binary raw data sequence forming a first frame being subdivided into a unique and different address characterizing the transmitter, a payload, and an error detecting code on the first frame determined from the payload and the address of the transmitter,

**characterized in that** it comprises

a second module (154) configured to spread in frequency, by a predetermined spreading factor SF, the first raw transmission frame in a second spread transmission frame in terms of transmission spectrum, the second spread transmission frame assuming the form of a second sequence of chips and being obtained, by first successively encoding the binary raw data of the first raw transmission frame into symbols with a length of a second predetermined number Ns according to a bijective correspondence rule between the set of all possible sequences of binary raw data with length the second number Ns and a set of two to the power Ns symbols, then by including each obtained symbol in a distinct spreading elementary encoding sequence formed by binary chips, encoded over two states chosen from among 0 and 1, the distinct elementary encoding sequence for spreading depending on the symbol and having for length, a third predetermined integer number of chips defined as the spreading factor SF, and

a pulse generator (144) to modulate and transmit, over the wire bus, the chips of the second spread frame in a transmitted communication signal according to a predetermined modulation,

each elementary transmission sequence being chosen from among the possible chip sequences, with spreading factor SF length, so as to form a balanced code having a central autocorrelation peak having a first level that is clearly higher than that second levels of the correlation products having correlation shifts, the duration of which is greater than a chip period, and

the times of the initial transmission of the two frames developed by the transmitter being autonomously and freely determined by each transmitter, without taking a synchronization signal outside the transmitter into account.

13. A communication receiver designed to be integrated into a system defined according to any one of claims 1 to 10, comprising

an analog head (514) for filtering and amplifying a received communication signal as being the sum of the communication signals emitted by the communication transmitters and conveyed to an input of the receiver, and

a unit (516) for sampling the received signal, the direct component of which has been eliminated by the analog head (514), in received signal samples according to sampling moments repeated at least at a Nyquist frequency substantially equal to twice the transmission frequency of the chips, the sampling moments following one another according to a fourth predetermined number Nphi, greater than or equal to two, of phases repeated cyclically according to a period equal to the duration of the chip and each identified by a phase rank comprised between 1 and Nphi,

a processing unit (518) configured to

after each sampling moment and from a previous number of first samples with the same phase rank as that of the sampling moment, equal to the product of the spreading spectrum SF times the total number of binary data N of a frame divided by the length Ns of a symbol, determine a third raw reception frame using a sliding frame window correlation unit (556, 558) and the set of elementary sequences, then

from the third frame, verifying whether the error detection code of the third determined frame detects the third erroneous frame, and when no error is detected by the error detection code, extracting the transmitter's address and comparing it to a predetermined list of transmitters.

14. A computer program product comprising program code instructions to implement the steps of the communication method according to any one of claims 10 to 11 when said program operates on one or more digital computers of a communication system according to any one of claims 1 to 9.

$\underline{\text{FIG.1}}$

## FIG.2

## FIG.3

$N_t$ bits

$N_t / N_s$ symboles

FIG.4

S0 $\boxed{0\ 0}$ → C0

S1 $\boxed{0\ 1}$ → C1

S2 $\boxed{1\ 0}$ → Inv (C0) : C2 ← 226

S3 $\boxed{1\ 1}$ → Inv (C1) : C3 ← 228

FIG.5

FIG.6

FIG.7

FIG.8

FIG.9

EP 2 974 054 B1

FIG.10

FIG.11

FIG.12

B1 $\uparrow I_S$

A1

408

PS

$\mu$C
Comm

V1

A2

B2 $\uparrow I_S + I_{PG}$

## FIG.13

$V_{mod}$

412

t

## FIG.14

## FIG.15

EP 2 974 054 B1

FIG.16

FIG.17

702

704

706

708

710

712

714

716

## FIG.18

**EP 2 974 054 B1**

## RÉFÉRENCES CITÉES DANS LA DESCRIPTION

### Documents brevets cités dans la description

- WO 2013014879 A